# EUROPEAN PATENT SPECIFICATION

(11) **EP 4 138 499 B1**
(45) Date of publication and mention of the grant of the patent: **28.10.2026**
(21) Application number: 21789204.1
(22) Date of filing: 12.04.2021
(51) Int. Cl.: H04L 1/1829, H04W 72/12

(54) **HARQ-ACK TRANSMISSION METHOD, TERMINAL, AND NETWORK SIDE DEVICE**
HARQ-ACK-ÜBERTRAGUNGSVERFAHREN, ENDGERÄT UND NETZWERKSEITIGE VORRICHTUNG
PROCÉDÉ DE TRANSMISSION HARQ-ACK, TERMINAL ET DISPOSITIF CÔTÉ RÉSEAU

(30) Priority: 15.04.2020 CN 202010296677
(43) Date of publication of application: 22.02.2023
(73) Proprietor: Datang Mobile Communications Equipment Co., Ltd., Beijing 100085 (CN)
(72) Inventor: GAO, Xuejuan, Beijing 100083 (CN); SI, Qianqian, Beijing 100083 (CN)
(74) Representative: Studio Torta S.p.A.
(86) International application number: PCT/CN2021/086617
(87) International publication number: WO 2021/208854

(56) References cited:
- WO-A1-2020/048364
- CN-A- 109 842 477
- CN-A- 110 034 901
- CN-A- 110 086 583
- CN-A- 110 149 172
- US-A1- 2019 103 943
- US-A1- 2019 268 803
- US-A1- 2020 044 791

## Description

### TECHNICAL FIELD

The present disclosure relates to the field of communications technology, and in particular, relates to a HARQ-ACK transmission method, a terminal and a network side device.

### BACKGROUND

In order to increase a scheduling efficiency and save a downlink control information (DCI) overhead, one DCI may be used to schedule transmission of multiple Physical Downlink Shared CHannels (PDSCHs). The PDSCHs may be a plurality of PDSCHs which are Time Division multiplexed (TDM) on the same carrier (that is, one DCI schedules at least two PDSCHs on the same carrier), or may be multiple PDSCHs on different carriers (i.e., one DCI schedules multiple carriers). However, there is no clear scheme about how to perform HARQ-ACK feedback when one DCI schedules multiple PDSCHs.

U.S. patent application publication No. US20190103943A1 discloses a method for an uplink transmission of a user equipment (UE) in a wireless communication system and the UE.

### SUMMARY

In view of the above problem, the present disclosure provides a HARQ-ACK transmission method, a terminal, and a network side device, so as to solve the problem that there is still no a clear HARQ-ACK feedback manner for a case in which one DCI schedules at least two PDSCHs. The present invention is defined in the accompanying claims.

The beneficial effects of the above technical solutions of the present disclosure are as follow.

In the embodiments of the present disclosure, the first DCIs used for scheduling a plurality of PDSCHs may be grouped according to the actually scheduled number of PDSCHs, and then HARQ-ACK sub-codebooks are respectively generated for each group, a HARQ-ACK codebook is then generated based on the HARQ-ACK sub-codebook for each group. Redundancy caused by always generating HARQ-ACK feedback for each DCI according to the maximum number of PDSCHs that the DCI can schedule can be avoided, thereby improving HARQ-ACK transmission performance and efficiency.

### BRIEF DESCRIPTION OF THE DRAWINGS

Fig. 1 is a schematic diagram of downlink scheduling timing and HARQ-ACK feedback timing;
Fig. 2 is a schematic diagram of determining a PDCCH monitoring occasion set for a dynamic HARQ-ACK codebook;
Fig. 3 is a schematic diagram of a downlink allocation index;
Fig. 4 is a flowchart of a HARQ-ACK transmission method according to some embodiments of the present disclosure;
Fig. 5 is a schematic diagram of an application scenario according to some embodiments of the present disclosure;
Fig. 6 is a flowchart of a HARQ-ACK transmission method according to some embodiments of the present disclosure;
Fig. 7 is a schematic structural diagram of a terminal according to some embodiments of the present disclosure;
Fig. 8 is a schematic structural diagram of a network side device according to some embodiments of the present disclosure;
Fig. 9 is a schematic structural diagram of a terminal according to some embodiments of the present disclosure;
Fig. 10 is a schematic structural diagram of a network side device according to some embodiments of the present disclosure.

### DETAILED DESCRIPTION

In order to make objectives, technical solutions and advantages of the embodiments of the present disclosure clearer, the technical solutions of the embodiments of the present disclosure will be clearly and completely described with reference to the drawings of the embodiments of the present disclosure. It will be apparent that the described embodiments are some, but not all, of the embodiments of the present disclosure.

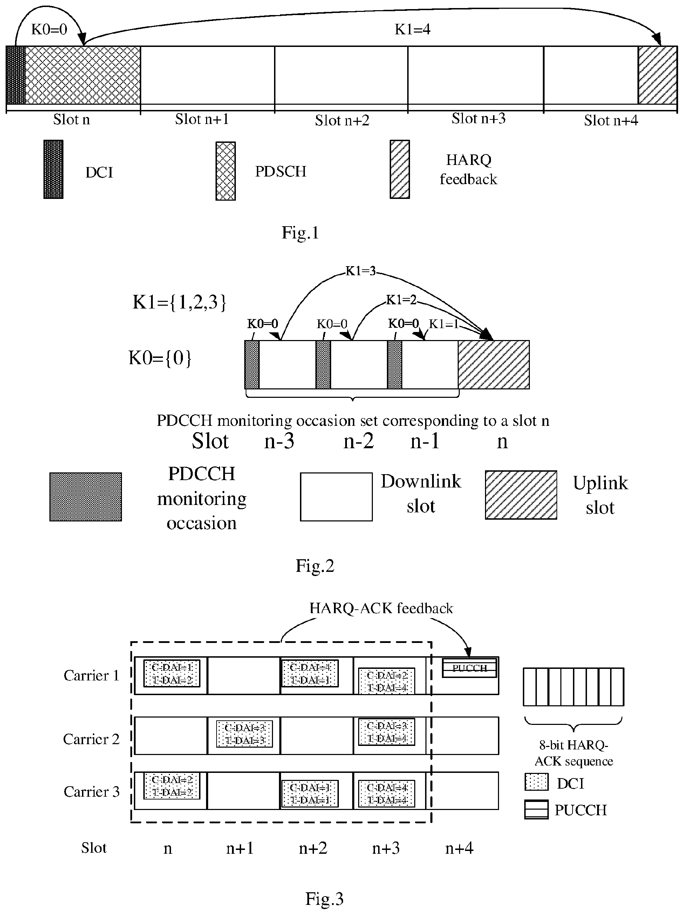

Flexible timing relationship is supported in a new radio communication system, i.e., 5 Generation New RAT, 5G NR. A Physical Downlink Control CHannel (PDCCH) carrying scheduling information of a PDSCH indicates a Scheduling timing (i.e., K0) relationship between the PDSCH and the PDCCH and a Hybrid automatic repeat request acknowledgement (HARQ-ACK) timing (i.e., K1) relationship between the PDSCH and a HARQ-ACK corresponding to the PDSCH. Specifically, referring to Fig. 1, a time-domain resource allocation indication field in a Downlink Control Information (DCI) format used by the PDCCH indicates a slot offset K0 between a slot where the PDSCH is located and a slot where the DCI is located; a PDSCH to HARQ-ACK feedback timing indication field in the DCI format indicates the number K1 of slots between the end of the PDSCH and the start of HARQ-ACK, that is, the HARQ-ACK for the PDSCH transmitted in the slot n is transmitted in the slot n + K1. A complete set of K1 is {0, 1, 2, 3, 4, 5, 6, 7, 8, 9, 10, 11, 12, 13, 14, 15}, and usually a maximum of 8 values therein are allocated to the terminal. Currently, a value of K1 may be in a unit of slot, i.e., K1 = 1 represents an interval of 1 slot; the value of K1 may also be in the unit of slot or sub-slot. The sub-slot may be pre-configured to be 2 symbols in length (i.e. 7 sub-slots exist sequentially in one slot), or 7 symbols in length (i.e. 2 sub-slots exist sequentially in one slot).

The 5G NR system supports two HARQ-ACK codebook generation methods, i.e., semi-static and dynamic HARQ-ACK codebooks. The HARQ-ACK codebook is a HARQ-ACK feedback sequence generated for downlink transmission for which HARQ-ACK feedback is performed at the same time domain location or uplink channel.

The Dynamic HARQ-ACK codebook performs HARQ-ACK ranking according to an indication of a Counter Downlink Assignment Index (C-DAI) field in DL DCI (i.e., a DCI for scheduling downlink transmission), and the total number of bits of the HARQ-ACK codebook is determined according to a Total DAI (T-DAI) field. Therefore, the size of the HARQ-ACK codebook can be adjusted according to actual scheduling at different feedback times, so as to dynamically change the size of the codebook, thereby saving a HARQ-ACK feedback overhead. Specifically, firstly, a PDCCH detection opportunity (i.e., a monitoring occasion) corresponding to an activated BandWidth Part (BWP) on one carrier needs to be determined according to K1, K0 and the configured number of repeated transmissions (if being configured). As shown in Fig. 2, for simplicity, it is assumed that no repeated transmission is performed, that is, a downlink transmission opportunity can be found according to n-K1, and then a corresponding PDCCH monitoring occasion can be found according to the scheduling relationship of the downlink transmission opportunity. If the number of repeated transmissions is great than 1, then K0 of repeatedly transmitted PDSCHs is determined based on a first slot of a plurality of slots occupied by the repeatedly transmitted PDSCHs, K1 of the repeatedly transmitted PDSCHs is determined based on the last slot of the plurality of slots occupied by the repeatedly transmitted PDSCHs, meaning that N slots from a downlink slot n-K1 to a downlink slot n-K1-N are a group of slots of the repeatedly transmitted PDSCHs; for the group of slots, the PDCCH monitoring occasion determined based on K0 is the PDCCH monitoring occasion corresponding to the slot n-K1-N. Assuming that K0 is always 0, the actual values of K0 may be a plurality of values, and if the K0 has a plurality of values, then a plurality of PDCCH monitoring occasion may be determined for a downlink slot corresponding to n-K1, and each slot may also include a plurality of PDCCH monitoring occasions. In a case of carrier aggregation, a complete set of PDCCH monitoring occasions of all carriers is obtained based on PDCCH monitoring occasions corresponding to each carrier, wherein PDCCH monitoring occasions on different carriers may not be aligned in time, and are ranked in an order of time (a chronological order), where the same time location may contain PDCCH monitoring occasions on multiple carriers. The terminal detects a PDCCH which uses a certain DCI format (e.g., one or more of Format 1-0, Format 1-1, Format 1-2) in the determined PDCCH monitoring occasion set, and generates a HARQ-ACK codebook according to the DAI information (including C-DAI and T-DAI) in the received PDCCH, assuming that the C-DAI and the T-DAI in the DCI are configured based on the PDCCH monitoring occasion set. The C-DAI indicates the cumulative number of PDSCHs that have been transmitted until the current PDCCH monitoring occasion on the current carrier in an order of the frequency domain first and then the time domain, or indicates the cumulative number of PDCCHs indicating release of Semi-Persistent Scheduling (SPS) PDSCHs, that is, when a PDCCH monitoring occasion exists on each of a plurality of carriers in one PDCCH monitoring occasion in a PDCCH monitoring occasion set which has been ranked in a chronological order, the C-DAI in DCI transmitted in a PDCCH monitoring occasion on each carrier is cumulatively countered in an order of a carrier numbering value (in the frequency domain), and then is cumulatively countered for DCIs on all carriers in a PDCCH monitoring occasion at the next time instant in the PDCCH monitoring occasion set. The T-DAI indicates the total number of PDSCHs transmitted on all carriers until the current PDCCH monitoring occasion, or indicates the number of PDCCHs indicating release of SPS PDSCH. The T-DAIs in DCIs in PDCCH monitoring occasions aligned in the time domain on multiple carriers are the same, as shown in Fig. 3.

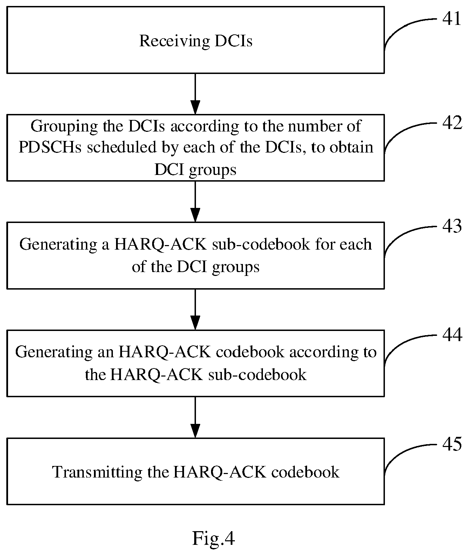

Please refer to Fig. 4. Fig. 4 is a schematic flowchart of a method of transmitting HARQ-ACK provided by some embodiments of the present disclosure, and the method is performed by a terminal, and includes the following steps:
Step 41: receiving one or more DCIs, wherein the one or more DCIs include one or more first DCIs used for scheduling a plurality of PDSCHs;
Step 42: grouping the one or more DCIs according to the number of PDSCHs scheduled by each of the one or more DCIs, to obtain one or more DCI groups;
Step 43: generating a HARQ-ACK sub-codebook for each of the one or more DCI groups;
Step 44: generating an HARQ-ACK codebook according to the HARQ-ACK sub-codebook;
Step 45: transmitting the HARQ-ACK codebook.

Specifically, the first DCI is configured or defined for scheduling at least two PDSCHs. HARQ-ACK feedback for the at least two PDSCHs may be performed in the same slot or sub-slot, and specifically, HARQ-ACK may be transmitted in the same HARQ-ACK codebook in the same slot or sub-slot. The HARQ-ACK codebook may be transmitted through a Physical Uplink Control Channel (PUCCH). Of course, if time-domain resources for the PUCCH carrying the HARQ-ACK codebook and a Physical Uplink Shared Channel (PUSCH) are overlapped, the HARQ-ACK codebook is transferred to be transmitted on the PUSCH.

It should be noted that the DCI is a specific format used by PDCCH transmission, and is transmitted by carrying specific information of a certain DCI format through the PDCCH, so receiving the DCI is equivalent to receiving the corresponding PDCCH.

In addition, the PDSCH is scheduled by the DCI, that is, the PDSCH is actually scheduled by the DCI. When the first DCI is functionally used to schedule a plurality of PDSCHs (i.e., the first DCI is capable of scheduling at least two PDSCHs), the first DCI may enable dynamic scheduling of one or more PDSCHs, for example, the first DCI is defined to schedule two PDSCHs, transmission of one or two PDSCHs may be scheduled according to a specific indication field of the first DCI, and the number of PDSCHs scheduled by the first DCI is the number of PDSCHs actually scheduled, which may be one or two PDSCHs. For example, if the first DCI schedules a terminal at a time instant 1 to transmit one PDSCH, then one PDSCH is scheduled by the first DCI at the time instant 1, and if the first DCI schedules the terminal at a time instant 2 to transmit two PDSCHs, then two PDSCHs are scheduled by the first DCI at the time instant 2.

The first DCI may also be used to schedule SPS PDSCH release (that is, the first DCI is actually used to indicate downlink SPS resource release), the first DCI scheduling the SPS PDSCH release may be agreed in advance to be equivalent to scheduling one PDSCH, therefore, if the first DCI scheduling the SPS PDSCH release is received, the number of PDSCHs scheduled by the first DCI is considered to be 1.

Some embodiments of the present disclosure provide a method of generating a HARQ-ACK codebook. First DCIs scheduling at least two PDSCHs may be grouped according to the number of actually scheduled PDSCHs by each of the first DCIs, and then a HARQ-ACK sub-codebook may be generated for each group, a HARQ-ACK codebook is then generated based on the HARQ-ACK sub-codebook of each group. It is possible to avoid redundancy caused by the HARQ-ACK feedback being always generated for a DCI according to the maximum number of PDSCHs that can be scheduled by the DCI, thereby improving a performance and efficiency of the HARQ-ACK transmission.

A DCI can also be used to indicate the SPS resource release, which is equivalent to a case that the DCI is used to schedule the SPS PDSCH release, and the DCI itself or the SPS PDSCH release scheduled by the DCI needs HARQ-ACK feedback to be performed in a similar way as that of the PDSCH, thereby enabling the base station to determine whether such a DCI has been correctly received by the terminal and knowing whether the SPS PDSCH release is successful; when the DCI schedules the SPS PDSCH release, no matter how many SPS PDSCH resources on carriers are released by the DCI at a time, the number, equivalent to the DCI, of scheduled PDSCHs can be directly agreed, for example, the DCI scheduling the SPS PDSCH release is agreed to be equivalent to the DCI scheduling one PDSCH. Thus, such DCIs are reasonably assigned into corresponding DCI groups for HARQ-ACK feedback. Of course, the above definition is not excluded, that is, it is also possible to define such a DCI to be equivalent to a DCI scheduling at least two PDSCHs.

The above HARQ-ACK codebook generation method is exemplified hereinafter.

Optionally, when the number of the DCI groups is at least two (that is, when the number of the DCI groups is at least two), the step of generating the HARQ-ACK codebook according to the HARQ-ACK sub-codebooks includes: concatenating at least two HARQ-ACK sub-codebooks together in a predetermined order to form the HARQ-ACK codebook.

Optionally, the step of grouping the DCIs according to the number of PDSCHs scheduled by each of the DCIs includes: grouping, into one group, the DCIs scheduling the same number of PDSCHs. That is, DCIs actually scheduling the same number of PDSCHs are grouped into one group. The DCI group may include only DCIs actually scheduling the same number of PDSCHs, or may include DCIs actually scheduling different numbers of PDSCHs.

For example, when the DCI is configured to schedule at most 2 PDSCHs, HARQ-ACK feedback for the DCIs on the same PUCCH may be grouped according to the number of PDSCHs actually scheduled by each DCI, the HARQ-ACK sub-codebooks are generated for cases where 2 PDSCHs and 1 PDSCH are respectively scheduled by DCIs, thereby avoiding redundancy caused by generating the HARQ-ACK codebook always according to 2 PDSCHs being scheduled by the DCI. Specifically, when no grouping is performed, HARQ-ACK for DCI which actually schedules one PDSCH needs to be generated according to the assumption of two PDSCHs, that is, Negative ACKnowledgement (NACK) used as a placeholder needs to be generated for another PDSCH that is not scheduled, that is, a placeholder for a PDSCH needs to be additionally generated, thereby generating the redundancy caused by the placeholder NACK. Reasons are given that when no grouping is performed, both the DCI scheduling one PDSCH and the DCI scheduling two PDSCHs are cumulatively counted, and the counting method only accumulates the number of DCIs. It is not known whether the DCI scheduling one PDSCH or the DCI scheduling two PDSCHs is lost when a DCI packet is dropped. When the terminal receives a C-DAI indicating 1 in one DCI and a C-DAI indicating 3 in another DCI, although it can be known according to the C-DAI that one DCI is lost between the two DCIs, the terminal does not know whether the lost DCI schedules one PDSCH or two PDSCHs, and therefore, in order to avoid inconsistency between the understanding of the base station and the understanding of the terminal, there is always a need for the placeholder with an assumption of two PDSCHs.

If all the received DCIs schedule the same number of PDSCHs, the grouping result is that there is only one DCI group, and it can be considered that a sub-codebook is not needed, or that the sub-codebook is the HARQ-ACK codebook, the HARQ-ACK codebook may be generated directly for PDSCHs scheduled by all DCIs.

In addition, the first DCI can also be used to schedule the SPS PDSCH release (that is, the first DCI is actually used to indicate the downlink SPS resource release), it can be agreed in advance that scheduling the SPS PDSCH release by the first DCI is equivalent to scheduling one PDSCH, therefore, if the first DCI scheduling the SPS PDSCH release is received, the first DCI scheduling the SPS PDSCH release and the first DCI scheduling one PDSCH are grouped into one group.

It should be noted that the one or more DCIs may further include a second DCI used for indicating downlink SPS resource release (i.e. scheduling SPS PDSCH release) or for scheduling only one PDSCH. When the one or more DCIs further include the second DCI, and the second DCI is used to indicate the downlink SPS resource release. It may be agreed that the second DCI scheduling the SPS PDSCH release is equivalent to a case where one PDSCH transmission is scheduled. That is, the DCI scheduling the SPS PDSCH release may be grouped in a similar way as the DCI scheduling one PDSCH transmission.

It should be further noted that the first DCI and the second DCI are two DCI formats, or the first DCI and the second DCI have two different DCI sizes, or the first DCI and the second DCI are scrambled by using different Radio Network Temporary Identities (RNTIs), or the first DCI and the second DCI are transmitted in different search spaces or control resource sets (CORESETs).

Optionally, when the one or more DCIs further include the second DCI used for scheduling the SPS PDSCH release (that is, for indicating the downlink SPS resource release) or for scheduling only one PDSCH, the step of grouping the one or more DCIs according to the number of PDSCHs scheduled by each of the one or more DCIs includes: grouping the second DCI and the first DCI scheduling one PDSCH into one group, grouping the first DCI scheduling at least two PDSCHs into another group; or grouping the second DCI and the first DCI scheduling one PDSCH into one group, and grouping the first DCIs scheduling at least two PDSCHs according to the number of PDSCHs scheduled by each of the first DCIs. Specifically, for the first DCIs scheduling at least two PDSCHs, the first DCIs scheduling the same number of PDSCHs are group into one group.

It should be further explained that, if the one or more DCIs include the first DCI that actually schedules one PDSCH, the second DCI and the first DCI that actually schedules one PDSCH are grouped into one group; otherwise, the second DCI is independently grouped into a group, wherein if all the first DCIs in the one or more DCIs schedule multiple PDSCHs, then the second DCI itself is grouped into one group, i.e., no first DCI is in a same group as the second DCI and the first DCIs themselves are grouped into one group (in this case, the first DCIs in the group schedule the same number of PDSCHs, such as, when the first DCIs are used to schedule a maximum of 2 PDSCHs, no first DCI scheduling only one PDSCH exists, all the first DCIs are first DCIs scheduling two PDSCHs; of course, a case where different first DCIs in the group including DCIs schedules different number of PDSCHs is not excluded, then when a HARQ-ACK sub-codebook is generated for this group, the maximum number of PDSCHs scheduled by a DCI in the group needs to be taken as the number of PDSCHs scheduled by one DCI in the group, that is, a value B in the following when determining the sub-codebook), or the first DCIs may be further grouped according to the number of PDSCHs actually scheduled by each first DCI, and the first DCIs that actually schedule the same number of PDSCHs are further grouped into one group.

That is, in the embodiments of the present disclosure, when the terminal further receives the second DCI, the second DCI and the first DCI which actually schedules only one PDSCH are grouped into one group. The second DCI is configured or defined to schedule one PDSCH or the second DCI is used to indicate the downlink SPS resource release (i.e. the SPS PDSCH release).

The first DCI may also be used to schedule the SPS PDSCH release (that is, the first DCI is actually used to indicate the downlink SPS resource release), it may be pre-agreed that scheduling the SPS PDSCH release by the first DCI is equivalent to the scheduling one PDSCH, therefore, if the first DCI scheduling the SPS PDSCH release is received, then the first DCI scheduling the SPS PDSCH release and the second DCI are grouped into one group.

Optionally, the step of receiving the DCI includes: receiving the DCI in a PDCCH monitoring occasion set corresponding to a slot or sub-slot where the HARQ-ACK codebook is transmitted.

Optionally, the HARQ-ACK for the PDSCH or the SPS PDSCH release scheduled (i.e., actually scheduled) by each of the one or more DCIs is transmitted in the same slot or sub-slot; and/or, the HARQ-ACK for the PDSCH or the SPS PDSCH release indicated by each of the one or more DCIs is transmitted in the same HARQ-ACK codebook.

The one or more DCIs is at least one DCI.

Further, if there are multiple first DCIs, HARQ-ACKs for the PDSCH or the SPS PDSCH release (it is not excluded that the first DCI may also be used to indicate the SPS PDSCH release as well) scheduled by the first DCIs are transmitted in the same slot or sub-slot, and/or, HARQ-ACKs for the PDSCH or the SPS PDSCH release scheduled by the first DCI are transmitted in the same HARQ-ACK codebook (i.e., if a priority of the HARQ-ACK codebook is give, these HARQ-ACKs correspond to the same priority, and thus will be transmitted in the same HARQ-ACK codebook); if a plurality of second DCIs exist, then HARQ-ACKs for PDSCH or SPS PDSCH release scheduled by the second DCIs are transmitted in the same slot or sub-slot, and/or HARQ-ACKs for PDSCH or SPS PDSCH release scheduled by the second DCIs are transmitted in the same HARQ-ACK codebook; if the first DCI and the second DCI exist simultaneously, HARQ-ACKs for the PDSCH or SPS PDSCH release scheduled by the first DCI and the second DCI are transmitted in the same slot or sub-slot, and/or HARQ-ACKs for the PDSCH or SPS PDSCH release scheduled by the first DCI and the second DCI are transmitted in the same HARQ-ACK codebook.

For example, when there are a plurality of the first DCIs, HARQ-ACKs for the PDSCHs scheduled by the plurality of first DCIs are transmitted corresponding to the same HARQ-ACK codebook in the same slot or sub-slot. For another example, when both the first DCI and the second DCI exist, the HARQ-ACKs for the PDSCH and SPS PDSCH release scheduled by the first DCI and the second DCI are transmitted corresponding to the same HARQ-ACK codebook in the same slot or sub-slot.

Optionally, the step of generating the HARQ-ACK sub-codebook for each of the DCI groups includes: in each of the DCI groups, determining the HARQ-ACK sub-codebook corresponding to the each of the DCI groups according to a DAI in a DCI in the DCI group and the PDSCH or the SPS PDSCH release scheduled by the DCI in the DCI group; wherein the DAI in the DCI in the DCI group is used to indicate the number of DCIs in the DCI group. That is, the DAI in the DCI in the DCI group only counts the number of DCIs in the DCI group, and the DCIs in other groups are not considered.

In the embodiments of the present disclosure, the DAI in the DCI is configured (used) independently for each HARQ-ACK sub-codebook, that is, counting of the DAI in each DCI group is implemented independently, or the DAI in each DCI group only counts the DCIs in the each DCI group. For example, if one DCI appears in the DCI group in the order of the frequency domain first and then the time domain, a value 1 is accumulated, and the DCIs in other DCI groups are not considered.

Optionally, the DAI in the DCI includes a C-DAI; or the DAI in the DCI includes a C-DAI and a T-DAI; wherein the C-DAI is used to indicate the number of DCIs cumulatively transmitted until a current PDCCH monitoring occasion of a current carrier, and the T-DAI is used to indicate the total number of DCIs cumulatively transmitted until a current PDCCH monitoring occasion.

Specifically, the C-DAI indicates the number of DCIs, used for scheduling PDSCHs or for indicating the SPS resource release, that are cumulatively transmitted until the current PDCCH monitoring occasion of the current carrier.

The T-DAI specifically represents the total number of DCIs cumulatively transmitted for scheduling the PDSCH or indicating the SPS resource release, until the current PDCCH monitoring occasion (PDCCH monitoring occasion in PDCCH monitoring occasion sets united on multiple carriers are numbered in a sequential order of starting locations of the monitoring occasions).

In the embodiments of the present disclosure, if the terminal is configured with a single carrier or if the terminal is configured with multiple carriers and all the configured carriers are scheduled by the same carrier, the DAI only includes the C-DAI; otherwise, the DAI includes the C-DAI and the T-DAI.

When the T-DAI exists, the size of the HARQ-ACK sub-codebook is determined according to the T-DAI and the number of bits of the HARQ-ACK corresponding to each DAI.

Optionally, the step of determining the HARQ-ACK sub-codebook corresponding to each DCI group of the DCI groups according to the DAI of the DCI in the DCI group and the PDSCH or the SPS PDSCH release scheduled by the DCI in the DCI group includes at least one of the following:
generating the HARQ-ACK of A*B bits for the PDSCH or the SPS PDSCH release scheduled by the DCI;
mapping the HARQ-ACK of the A*B bits in a location, determined according to the DAI in the corresponding DCI, in the HARQ-ACK sub-codebook;
determining the size of the HARQ-ACK sub-codebook according to the DAI in the DCI in the DCI group;
generating a NACK at a location, in the HARQ-ACK sub-codebook, where information is not received, the information not received includes the DCI and the PDSCH or the SPS PDSCH release scheduled by the DCI.

A is the number of HARQ-ACK bits corresponding to each PDSCH or each SPS PDSCH release scheduled by one DCI, B is the number of PDSCHs scheduled by one DCI, and A and B are positive integers, the number of HARQ-ACK bits corresponding to each PDSCH is determined according to a parameter related to a transmission mode of the PDSCH.

That is, the number of HARQ-ACK bits corresponding to the DCI may be determined according to the number of PDSCHs actually scheduled by the DCI and the number of HARQ-ACK bits corresponding to each PDSCH actually scheduled by the DCI. Here, the number of HARQ-ACK bits corresponding to the DCI is the sum of the number of HARQ-ACK bits of each PDSCH in the PDSCHs scheduled by the DCI, and is the number of HARQ-ACK bits of only one PDSCH if only the PDSCH is scheduled; the number of HARQ-ACK bits corresponding to each PDSCH actually scheduled by the DCI is determined according to a parameter related to a transmission mode of the PDSCH.

Specifically, the HARQ-ACK of A*B bits is generated for one PDSCH actually scheduled by the first DCI, wherein A is the number of HARQ-ACK bits corresponding to each PDSCH actually scheduled by the first DCI, and B is the number of PDSCHs actually scheduled by the first DCI. A is determined according to a parameter related to the transmission mode of the PDSCH, A = L*M. L = 1 when the terminal is not configured to use a Code Block Group (CBG) based transmission; L is the maximum number of CBGs of each configured Transport Block (TB) when the terminal is configured to use the CBG based transmission. M=2 when the terminal is configured to use multi-TB transmission and is not configured to use HARQ-ACK spatial bundling (i.e., a logical AND operation is performed between the HARQ-ACK for each of a plurality of TBs included in one PDSCH, to obtain the HARQ-ACK after a 1-bit bundling corresponding to this TB is obtained); or M = 1 when the terminal is configured to use the single TB transmission or HARQ-ACK spatial bundling.

In case of the DCI scheduling the downlink SPS resource release, the number of HARQ-ACK bits corresponding to the downlink SPS resource release scheduled by the DCI is determined according to the related art, and is fixed to 1 bit, for example.

Specifically, for one DCI group, the HARQ-ACK corresponding to the PDSCH or the downlink SPS resource release actually scheduled by each DCI in the DCI group is mapped into the corresponding HARQ-ACK sub-codebook according to an order of C-DAI carried in the DCI. In other words, the order of the received DCIs in one DCI group may be determined according to the C-DAI, so that the feedback information of A*B bits corresponding to each DCI is mapped to a corresponding location in the HARQ-ACK sub-codebook. In other words, HARQ-ACKs corresponding to the PDSCHs or the downlink SPS resource release scheduled by DCIs in the DCI group are ordered according to the C-DAIs in the DCIs in the DCI group. In addition, it is necessary to generate, according to the A*B bits, a NACK placeholder for the DCI location where it is determined that there is a packet loss.

It can be determined, according to the T-DAI (if no T-DAI exists, then according to the C-DAI in the last DCI), how many DCIs are scheduled in total in one DCI group, so that the number of bits of the HARQ-ACK sub-codebook corresponding to the DCI group may be determined by combining the number of HARQ-ACK bits corresponding to each DCI.

For one DCI group, a NACK as feedback information is generated for a location where the DCI is not received.

The DCI group may consist of first DCIs actually scheduling a plurality of PDSCHs, or may consist of a first DCI actually scheduling only one PDSCH and/or a second DCI (used to schedule one PDSCH and/or indicate the downlink SPS resource release). NACK as feedback information is generated for a location, where no DCI is received, of the HARQ-ACK sub-codebook.

Optionally, the step of generating the HARQ-ACK of A*B bits for the PDSCH or the SPS PDSCH release scheduled by one DCI includes: perform ranking in an order of indexes of carriers in which transmissions of the scheduled plurality of PDSCHs are located and/or in an order of time-domain locations at which transmissions of the scheduled plurality of PDSCHs are located, when one DCI schedules the at least two PDSCHs (i.e., B is a positive integer greater than 1), wherein the time-domain location is a slot or a sub-slot or a symbol.

Specifically, when the number B of PDSCHs actually scheduled by the first DCI is greater than 1, the HARQ-ACKs for the B PDSCHs are sequenced according to at least one order of the following: an order of indexes of carriers in which transmissions of the PDSCHs are located, and an order of slots or sub-slots or symbols where transmissions of the PDSCHs are located. The order of indexes of carriers may be an order of the indexes from small to large or an order of the indexes from large to small. The order of slots or sub-slots or symbols, i.e., the order of the time-domain locations, is a time sequence.

For example, the B PDSCHs actually scheduled by the first DCI are PDSCHs on B carriers, wherein one PDSCH is on each carrier, the B PDSCHs are ordered in the order of indexes of the carriers from small to large.

For another example, the B PDSCHs actually scheduled by the first DCI are PDSCHs on B1 (B1<B) carriers, wherein B2 (B2<B) PDSCHs in different slots or different sub-slots or different symbols exist on each carrier. Of course, the numbers of PDSCHs on different carriers may also be different, in this case, ranking is performed according a rule of ranking in the frequency domain first and then ranking in the time domain, that is, the indexes of carriers for the same time domain location are ordered from small to large first, and then different time-domain locations are ordered. The same time-domain location may be the same slot, the same sub-slot, the same starting symbol, the same starting time instant, or one or more slots or sub-slots or symbols on the carriers, obtained by referring to the same subcarrier spacing (SCS) in the time domain, on which the B PDSCHs are respectively located.

In summary, the HARQ-ACK sub-codebooks for one DCI group are generated according to the following process:
1. determining the number of HARQ-ACK bits corresponding to PDSCHs actually scheduled by a DCI in the DCI group and/or the number of HARQ-ACK bits corresponding to a PDCCH actually scheduled for indicating the downlink SPS resource release, respectively;
2. if the DCI in the DCI group actually schedules two or more PDSCHs, then ranking HARQ-ACKs corresponding to the PDSCHs actually scheduled by each DCI, according to at least one order of the following: an order of indexes of carriers on which transmissions of the actually scheduled PDSCHs are located, and an order of time-domain locations at which transmissions of the actually scheduled PDSCHs are located, to form the HARQ-ACK corresponding to each DCI; and if the DCI in the DCI group actually schedules only one PDCSH or indicates the downlink SPS resource release, then the HARQ-ACK corresponding to the DCI can be formed without ranking;
3. determining, according to the DAI of the DCI group, a location at which a DCI is not received, and determining the total size of the HARQ-ACK sub-codebook;
4. ranking, according to the C-DAI in the DCI group, the HARQ-ACKs corresponding to the PDSCHs or the downlink SPS resource release scheduled by the DCIs in the DCI group, and generating a NACK as feedback information for a location where a DCI is received and forming a HARQ-ACK sub-codebook for the DCI.

Optionally, when the first DCI schedules at least two PDSCHs, the at least two PDSCHs include at least one of following:
at least two PDSCHs transmitted at different time-domain locations on one carrier;
at least two PDSCHs on a plurality of carriers, wherein each of the carriers carries one PDSCH;
at least two PDSCHs on a plurality of carriers, wherein at least one of the carriers carries multiple PDSCHs transmitted at different time-domain locations.

The different time-domain locations may be different slots or different sub-slots or different symbol locations.

Specifically, the first DCI may be used for scheduling at least two PDSCHs transmitted on one carrier and in different slots or different sub-slots or different symbol locations; or the first DCI may also be used for scheduling at least two PDSCHs on a plurality of carriers, and only one PDSCH is scheduled on each carrier or at least two PDSCHs transmitted in different slots or different sub-slots or different symbol locations may be scheduled on each carrier. HARQ-ACKs for the at least two PDSCHs scheduled by the first DCI may be transmitted on the same PUCCH.

Optionally, when at least one of the following conditions is satisfied, the DCIs are grouped according to the number of PDSCHs scheduled by each of the DCIs and one or more DCI groups are obtained:
when the first DCI schedules at least two PDSCHs transmitted on a plurality of carriers, the plurality of carriers have the same subcarrier spacing;
when the first DCI schedules at least two PDSCHs transmitted on a plurality of carriers, there is no offset between indexes of slots or sub-slots corresponding the plurality of carriers;
when the first DCI schedules at least two PDSCHs transmitted on a plurality of carriers, the plurality of carriers have the same PDSCH processing capability;
the terminal is configured to employ a dynamic HARQ-ACK codebook.

The condition that there is no offset between indexes of slots or sub-slots corresponding the plurality of carriers, that is, there is no offset, caused by out-of-synchronization in the time domain, between indexes of slots or sub-slots corresponding the plurality of carriers, means that indexes of aligned slots or sub-slots are possessed in common.

It can be added in the specification that a plurality of processing capabilities can be defined from a UE capability, and minimum time durations required for decoding a PDSCH under different processing capabilities are different. For example, it is defined that capability 1 is shown in Table 1 below, and capability 2 is shown in Table 2 below;

**Table 1: PDSCH processing time under a PDSCH processing capability 1**

| *µ* (a numbering value of a subcarrier spacing) | PDSCH decoding time *N₁* [symbols] | |
|---|---|---|
| | When there is no additional DMRS | When there is an additional DMRS |
| 0 (15kHz SCs) | 8 | *(a value related to a location of the additional DMRS) N_{1,0}* |
| 1 (30kHz SCs) | 10 | 13 |
| 2 (60kHz SCs) | 17 | 20 |
| 3 (120kHz SCs) | 20 | 24 |

**Table 2: PDSCH processing time under a PDSCH processing capability 2**

| *µ* | **PDSCH decoding time *N₁* [symbols]** |
|---|---|
| | **When there is no additional DMRS** |
| 0 | 3 |
| 1 | 4.5 |
| 2 | 9 (for frequency range 1) |

DMRS is a Demodulation Reference Signal.

That is, the HARQ-ACK codebook generating method provided by the embodiments of the present disclosure may be employed when at least one of the above conditions is satisfied.

For example, it is assumed that the terminal is configured with 3 carriers, and a dynamic HARQ-ACK codebook is adopted, where K1 = {1, 2, 3, 4}, and K0 = 0 (where K0 may be multiple values, if the K0 adopt multiple values, then a plurality of PDCCH monitoring occasions can be founding accord to a combination of one value of K1 and the multiple values of K0) for simplicity, and the terminal is configured with a DCI format x for scheduling PDSCH transmissions on a maximum of two carrier, one DCI format x schedules only one PDSCH on each carrier, where the DCI format x is transmitted on carrier 1 and can be used to schedule PDSCH transmissions on carrier 1 and carrier 2 simultaneously. Of course the DCI format x may simultaneously schedule a total of the two PDSCH transmissions on carrier 1 and carrier 2 at a time instant 1. The DCI format x may also schedule only one PDSCH transmission on either carrier 1 or carrier 2 at a time instant 2. A DCI format y is transmitted on carrier 3 and is used for scheduling only one PDSCH transmission on carrier 3, i.e., one carrier.

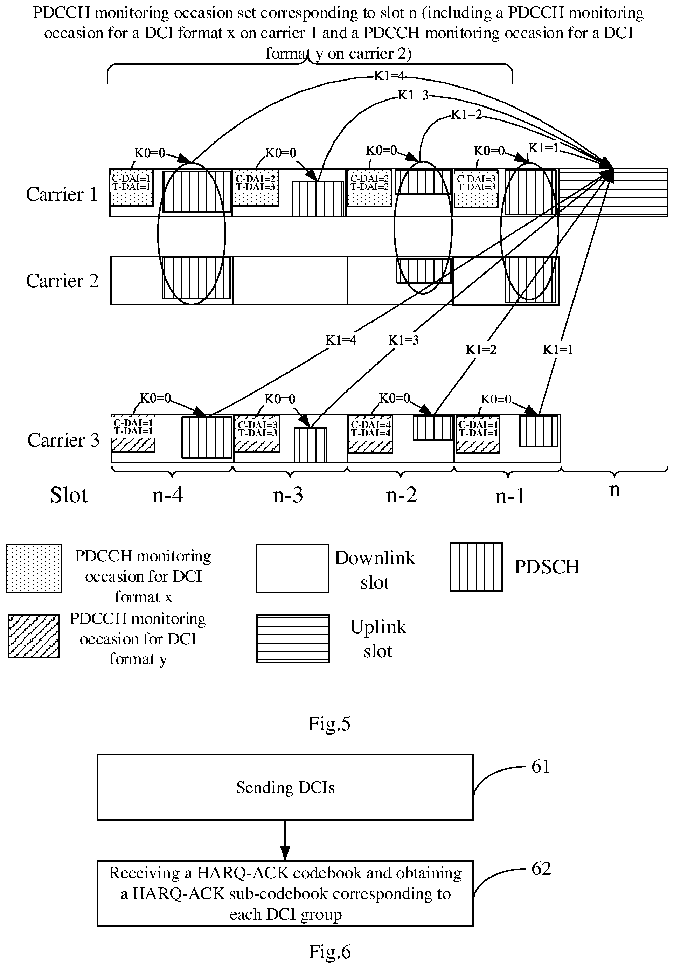

The terminal may know, according to K1, K0 and other parameters for determining the HARQ-ACK codebook, the PDCCH monitoring occasion in the corresponding slot n, as shown in Fig. 5, wherein, according to scheduling relationship, the PDCCH monitoring occasion exists only on carriers (i.e., on carriers 1 and 3) capable of transmitting a scheduling signaling (i.e., DCI), the terminal receives a DCI in each PDCCH monitoring occasion in slots n-4 to n-1, and when all DCIs are received, it may be determined according to the scheduling information in the DCIs whether the DCI format x on carrier 1 actually schedules 1 PDSCH or 2 PDSCHs, while the DCI format y on carrier 3 is known to be capable of scheduling only one PDSCH, so that the received DCI formats can be grouped, only one PDSCH transmission is scheduled by the DCI format x in the slot n-3 on carrier 1, this DCI format x scheduling one PDSCH and the DCI format y in each PDCCH monitoring occasion on carrier 3 are grouped into one group (e.g., a first group), and the DCI formats x in slots n-4, n-2 and n-1 on carrier 1 which schedule two PDSCH are grouped into another group (e.g., the second group), this grouping method is the same as that for the base station.

In the first group, HARQ-ACK feedback information for PDSCHs respectively scheduled by DCI formats x and y are concatenated one by one according to a counting order of C-DAIs in the DCIs, and the size of the HARQ-ACK sub-codebook (A*1*C, C is the total value actually indicated by the T-DAI in the last DCI in the case that a modulo-4 calculation is used) according to the T-DAI value in the last DCI (a time-domain location of which is the latest) in the first group, to obtain the first HARQ-ACK sub-codebook corresponding to the first group, and if a certain DCI of the DCIs is lost, that is, if the terminal side fails to receive the certain DCI in a certain slot, the terminal may know that there is a packet loss according to the C-DAI in the DCI received after the lost DCI, and it is necessary to generate a NACK for the lost DCI, and if there is no other DCI after the lost DCI, occurrence of the packet loss can be determined from the T-DAIs in the DCIs transmitted at other frequency-domain locations at the same time-domain location (e.g. assuming that a slot n-3 is the last slot, then if the DCI on carrier 3 is lost which is the last DCI without a further DCI after this DCI, so it is not known that there is also a subsequent DCI having a C-DAI = 3 from a C-DAI=2 in the DCI on carrier 1 in the slot n-3, however, it can be known that one DCI is lost from the T-DAI = 3 in the DCI on carrier 1 in the slot n-3, thus it is clear that the length of the HARQ-ACK feedback sequence is to be calculated according to scheduling of 3 DCIs instead of 2 DCIs), and thus a NACK is generated for the location where the packet loss occurs, wherein each DCI only schedules 1 PDSCH, each DCI only needs to correspond to a HARQ-ACK of A bits, where "A" is determined as describe above and indicates the number of HARQ-ACK bits corresponding to one PDSCH determined according to the transmission mode of the PDSCH; the HARQ-ACK feedback information for two PDSCHs scheduled by each DCI format x in the second group are concatenated one by one according to the counting order of the C-DAIs in the DCIs, to obtain a second HARQ-ACK sub-codebook corresponding to the second group, wherein each DCI schedules 2 PDSCHs, and each DCI needs to correspond to the HARQ-ACK of A*2 bits.

The first HARQ-ACK sub-codebook and the second HARQ-ACK sub-codebook are concatenated together, for example, it is agreed that the concatenating is performed in an order of the numbers of PDSCHs scheduled by the first DCIs corresponding to the sub-codebooks from small to large, that is, the second HARQ-ACK sub-codebook is concatenated behind the first HARQ-ACK sub-codebook (or the second HARQ-ACK sub-codebook is concatenated before the first HARQ-ACK sub-codebook, as long as the same concatenation rule is agreed with the base station in advance), so as to obtain the HARQ-ACK codebook_{∘} This HARQ-ACK codebook may in turn be transmitted on the corresponding PUCCH or PUSCH resource in the slot n.

In the above example, a DCI on carrier 3 may indicate scheduling of one PDSCH or may further indicate the SPS PDSCH release. For example, one DCI scheduling a PDSCH on carrier 3 is replaced by a DCI indicating the SPS PDSCH release. That is, a DCI is sent in a PDCCH monitoring occasion in a certain slot on the carrier 3, the DCI is used to indicate that the SPS PDSCH release, the DCI itself is similar to a PDSCH and needs HARQ-ACK feedback to be performed in the slot n according to the value K1.

In that above example, one DCI format x may simultaneously schedule transmission of one PDSCH on each of a plurality of carriers, or may simultaneously schedule transmissions of multiple PDSCHs on different time-domain locations such as multiple slots, multiple sub-slots, and multiple symbols on one carrier, or may simultaneously schedule one or more PDSCHs to be transmitted on each of multiple carriers.

In the above example, if carrier 3 does not exist, then because for carriers 1 and 2, a DCI format x may schedule 2 PDSCHs at some time instants and schedule 1 PDSCH at some time instants, the method provided in the embodiments of the present disclosure may also be used. If, for example, the DCI format x in the slot n-3 on the carrier 1 schedules only transmission of one PDSCH, then this DCI format x is taken as a group (e.g., the first group), while the DCI formats x in slots n-4, n-2 and n-1 on carrier 1 are taken as another group (e.g., the second group) since they schedule two PDSCHs.

In the above method, if all the received DCI formats x schedule the same number of PDSCHs, for example, schedule one PDSCH, then a result of the grouping is that only one group is obtained, and it can be considered that the sub-codebook is unnecessary or the sub-codebook itself is an HARQ-ACK codebook, and the HARQ-ACK codebook may be directly generated for the PDSCHs scheduled by all the DCI formats x, for example, 2 PDSCHs. It needs also to be seen if a DCI format y, on carrier 3, scheduling one PDSCH is received, and if there is no carrier 3 or there is carrier 3 but any DCI format y is not received on the carrier 3, then it is determined that the terminal has only one type of DCI formats x scheduling two PDSCHs, the result of the grouping is that only one group is obtained, and it can be considered that the sub-codebook may not be needed or the sub-codebook itself is the HARQ-ACK codebook, the HARQ-ACK codebook may be generated directly for PDSCHs scheduled by all the DCI format x. It should be noted that the embodiments of the present disclosure are not only applicable to slot-based HARQ-ACK feedback (that is, the unit of K1 is a slot), but also applicable to sub-slot-based HARQ-ACK feedback (that is, the unit of K1 is a sub-slot). The embodiments of the present disclosure are not only applicable to the case where different carriers have the same SCS, but also applicable to the case where different carriers have different SCSs.

Please refer to Fig. 6. Fig. 6 is a schematic flow chart of a method of HARQ-ACK transmission provided by some embodiments of the present disclosure, and the method is performed by a network side device, and includes the following steps 61-62.

Step 61: transmitting one or more DCIs, wherein the one or more DCIs include one or more first DCIs used for scheduling at least two PDSCHs;

Step 62: receiving a HARQ-ACK codebook and obtaining a HARQ-ACK sub-codebook corresponding to each DCI group, wherein the DCI group is obtained by grouping the one or more DCIs according to the number of PDSCHs scheduled by each of the DCIs.

The network side device may specifically be a base station.

In the embodiments of the present disclosure, the one or more first DCIs for scheduling at least two PDSCHs may be grouped accord to the number of PDSCHs actually scheduled, and then the HARQ-ACK sub-codebook is generated for each group, a HARQ-ACK codebook is then generated based on the HARQ-ACK sub-codebooks of the groups. It is possible to avoid the redundancy caused by the HARQ-ACK feedback being always generated for each DCI according to the maximum number of PDSCHs that can be scheduled by the DCI, thereby improving performance and efficiency of the HARQ-ACK transmission.

Optionally, when the DCI groups are at least two, the step of obtaining the HARQ-ACK sub-codebook corresponding to each DCI group includes: determining that at least two HARQ-ACK sub-codebooks are concatenated together in a predetermined order to form the HARQ-ACK codebook.

After generating the HARQ-ACK sub-codebook for each DCI group, the terminal may concatenate the HARQ-ACK sub-codebooks together in a predetermined order to form the HARQ-ACK codebook.

Optionally, before the step of transmitting the one or more DCIs, the method further includes: grouping DCIs, of the one or more DCIs, scheduling the same number of PDSCHs into one group.

Optionally, the one or more DCIs further include a second DCI for scheduling the SPS PDSCH release or for scheduling one PDSCH.

Before the step of transmitting the one or more DCIs, the method further includes: grouping the second DCI and one or more first DCIs scheduling one PDSCH into one group, and grouping one or more first DCIs scheduling a plurality of PDSCH into one group; or grouping the second DCI and the one or more first DCIs scheduling one PDSCH into one group, and grouping one or more first DCIs scheduling at least two PDSCHs according to the number of PDSCHs scheduled by each of the one or more first DCIs into one or more groups.

Optionally, the HARQ-ACK for the PDSCH or the SPS PDSCH release scheduled by each of the DCIs is transmitted in the same slot or sub-slot; and/or, the HARQ-ACK for the PDSCH or the SPS PDSCH release scheduled by each of the DCIs is transmitted in the same HARQ-ACK codebook.

Optionally, the step of obtaining the HARQ-ACK sub-codebook corresponding to each DCI group includes: determining the HARQ-ACK sub-codebook corresponding to each DCI group determined by the terminal according to the DAI in the DCI of the DCI group and the PDSCH or the SPS PDSCH release scheduled by the DCI in the DCI group; wherein the DAI in the DCI in the DCI group is used to indicate the number of DCIs in the DCI group.

In the embodiments of the present disclosure, the DAI of the DCI in each DCI group is configured independently.

Optionally, the DAI in the DCI includes a C-DAI; or the DAI in the DCI includes C-DAI and T-DAI; the C-DAI is used to indicate the number of DCIs cumulatively transmitted until a current PDCCH monitoring occasion of a current carrier, and the T-DAI is used to indicate the total number of DCIs cumulatively transmitted until a current PDCCH monitoring occasion.

Optionally, determining the HARQ-ACK sub-codebook corresponding to each DCI group determined by the terminal according to the DAI of the DCI in the DCI group and the PDSCH or the SPS PDSCH release scheduled by the DCI in the DCI group includes at least one of the following:
generating HARQ-ACKs of A*B bits for PDSCHs or SPS PDSCH release scheduled by one DCI;
mapping the HARQ-ACKs of the A*B bits in corresponding locations determined according to the DAI in the DCI in the HARQ-ACK sub-codebook;
determining the size of the HARQ-ACK sub-codebook according to the DAIs in the DCIs in the DCI group;
generating a NACK for a location, in the HARQ-ACK sub-codebook, where a DCI is not received;
wherein A is the number of HARQ-ACK bits corresponding to each PDSCH or SPS PDSCH release scheduled by one DCI, B is the number of PDSCHs scheduled by the one DCI, and A and B are positive integers, the number of HARQ-ACK bits corresponding to each PDSCH is determined according to a parameter related to a transmission mode of the PDSCH.

Optionally, the step of generating the HARQ-ACKs of A*B bits for PDSCHs or SPS PDSCH release scheduled by the one DCI includes: when at least two PDSCHs are scheduled by the one DCI, ranking according to at least one order of the following: an order of indexes of carriers on which the scheduled plurality of PDSCHs are located, and an order of time domain locations at which the scheduled plurality of PDSCHs are located, wherein the time-domain locations are slots or sub-slots or symbols.

Optionally, when the first DCI schedules at least two PDSCHs, the at least two PDSCHs includes at least one of the following: at least two PDSCHs transmitted at different time-domain locations and on one carrier; at least two PDSCHs on a plurality of carriers, wherein each of the plurality carriers carries one PDSCH; at least two PDSCHs on a plurality of carriers, wherein at least one of the carriers includes at least two PDSCHs transmitted at different time-domain locations.

Optionally, when at least one of the following conditions is satisfied, the DCIs are grouped according to the number of PDSCHs scheduled by each of the DCIs to obtain the DCI group:
when the first DCI schedules at least two PDSCHs transmitted on a plurality of carriers, the plurality of carriers have the same subcarrier spacing;
when the first DCI schedules at least two PDSCHs transmitted on a plurality of carriers, there is no offset between slot indexes or sub-slot indexes corresponding to the plurality of carriers;
when the first DCI schedules at least two PDSCHs transmitted on a plurality of carriers, the plurality of carriers have the same PDSCH processing capability;
the terminal is configured to employ a dynamic HARQ-ACK codebook.

For example, it is assumed that the terminal is configured with 3 carriers, a dynamic HARQ-ACK codebook is adopted, where K1 = { 1, 2, 3, 4}, and assuming that K0 = 0 for simplicity (where K0 may be multiple values, and if K0 may take the multiple values, then multiple PDCCH monitoring occasions may be found according to a combination of one value of K1 with multiple values of K0). The terminal is configured with a DCI format x for scheduling PDSCH transmissions on a maximum of two carriers. One DCI format x schedules only one PDSCH on each carrier, where the DCI format x is transmitted on carrier 1 and can be used to schedule PDSCH transmissions on carrier 1 and carrier 2 simultaneously. Of course, the DCI format x may simultaneously schedule a total of two PDSCH transmissions on carrier 1 and carrier 2 at a time instant 1. The DCI format x may also schedule only one PDSCH transmission on either carrier 1 or carrier 2 at a time instant 2; the DCI format y is transmitted on carrier 3 and is used for scheduling only one PDSCH transmission on carrier 3, i.e., one carrier.

Referring to Fig. 5, the base station determines that DCI used for scheduling a PDSCH transmission is transmitted in each PDCCH monitoring occasion in the slots n-4 to n-1 and on the carrier 1 and the carrier 3. Since according to actual transmission conditions, only one PDSCH transmission is scheduled by the DCI format x in the slot n-3 and on carrier 1, the DCI format y in each PDCCH monitoring occasion on carrier 3 and this DCI format x are grouped as one group (e.g., a first group), in which each DCI format schedules only one PDSCH. The DCI formats x in slots n-4, n-2 and n-1 on carrier 1 are grouped into another group (e.g., the second group) since each of the DCI formats x schedules two PDSCHs.

Five DCIs in the first group (one DCI in the slot n-3 on carrier 1, four DCIs in the slot n-4, the slot n-3, the slot n-2 and the slot n-1 on carrier 3) are cumulatively counted in the order of counting in the frequency domain first and then counting in the time domain. As shown in Fig. 5, values of the C-DAI and the T-DAI in each DCI in the first group are configured as shown in Fig. 5 (where each of C-DAI and T-DAI is assumed to be 2 bits in length, indication for a value exceeding 4 is reused by modulo-4; the terminal may determine, according to the number of actually received DCIs, whether 1 DCI or 5 DCIs are indicated when the C-DAI is 1, for example, 4 DCIs have been received, and when a C-DAI=1 is received again, it is understood that 5 is indicated; other numerical values are similar to this example and will not be described again), indicating that 5 DCI formats x and y each scheduling 1 PDSCH transmission are sent in total, where C-DAI is obtained by accumulating a value 1 for each DCI in the first group; the T-DAI is obtained by configuring the same value for all DCIs on all carriers in the same PDCCH monitoring occasion in the first group, because this value is used to express, from a perspective of a time instant of the time-domain, the total number of DCIs scheduled on all carriers at the current time instant; thus, in the slot n-3, the T-DAI values in the DCIs on both carrier 1 and carrier 3 are 3; the three DCIs in the second group are cumulatively counted in the order of counting in the frequency domain first and then counting in the time domain, as shown in Fig. 5, that is, the C-DAI values in the DCIs in the second group are configured to be 1, 2, 3, respectively, and the T-DAI value is the same as the C-DAI value in each DCI because there is no accumulation on multiple carriers in the frequency domain at the same time instant, and this represents that 3 DCI formats x each scheduling 2 PDSCH transmissions are transmitted in total.

The HARQ-ACK transmitted by the terminal is received in the slot n, wherein the HARQ-ACK may be transmitted through the PUCCH or the PUSCH, and the HARQ-ACK sub-codebook corresponding to each DCI group is obtained from the received HARQ-ACK according to the manner of generating and concatenating the HARQ-ACK sub-codebooks, so as to obtain HARQ-ACK feedback information respectively corresponding to the PDSCHs scheduled by each DCI group, and then perform retransmission of an erroneous PDSCH (the feedback of which is NACK).

The embodiments of the present disclosure provide a technical solution corresponding to the above embodiments and having the same inventive concept, and can achieve the same technical effect. For details of the embodiments, please refer to the embodiments having been described, which is not repeated here.

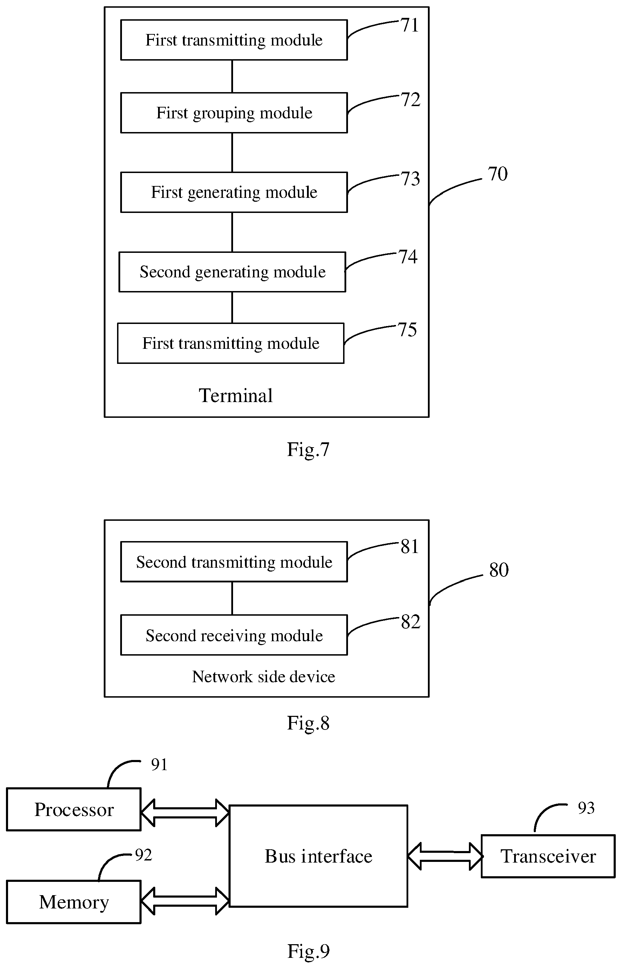

Please refer to Fig. 7 which is an embodiment not covered by the claims. Fig. 7 is a schematic structural diagram of a terminal according to some embodiments of the present disclosure, wherein the terminal 70 includes: a first receiving module 71, configured to receive one or more DCIs, wherein the one or more DCIs include one or more first DCIs used for scheduling at least two PDSCHs; a first grouping module 72, configured to group the one or more DCIs according to the number of PDSCHs scheduled by each of the one or more DCIs, to obtain one or more DCI groups; a first generating module 73, configured to generate a HARQ-ACK sub-codebook for each of the one or more DCI groups; a second generating module 74, configured to generate an HARQ-ACK codebook according to the HARQ-ACK sub-codebook; a first transmitting module 75, configured to send the HARQ-ACK codebook.

Optionally, the second generating module 74 includes: a concatenation unit, configured to, when the number of the DCI groups is at least two, concatenate at least two HARQ-ACK sub-codebooks together in a predetermined order to form the HARQ-ACK codebook.

Optionally, the first grouping module 72 is configured to group, into one group, the DCIs scheduling the same number of PDSCHs.

Optionally, the one or more DCIs further include a second DCI used to schedule a downlink SPS resource release or schedule only one PDSCH.

The first grouping module is configured to group the second DCI and the first DCI scheduling one PDSCH into one group, group the first DCI scheduling at least two PDSCHs into another group; or group the second DCI and the first DCI scheduling one PDSCH into one group, and group the first DCIs scheduling at least two PDSCHs according to the number of PDSCHs scheduled by each of the first DCIs.

Optionally, the HARQ-ACK for the PDSCH or the SPS PDSCH release indicated by each of the one or more DCIs is transmitted in the same slot or sub-slot; and/or, the HARQ-ACK for the PDSCH or the SPS PDSCH release indicated by each of the one or more DCIs is transmitted in the same HARQ-ACK codebook.

Optionally, the first generating module 73 is configured to determine the HARQ-ACK sub-codebook corresponding to each of the DCI groups according to a DAI in a DCI in the DCI group and the PDSCH or the SPS PDSCH release scheduled by the DCI in the DCI group; wherein the DAI in the DCI in the DCI group is used to indicate the number of DCIs in the DCI group.

Optionally, the DAI in the DCI includes a C-DAI; or the DAI in the DCI includes a C-DAI and a T-DAI; wherein the C-DAI is used to indicate the number of DCIs cumulatively transmitted until a current PDCCH monitoring occasion of a current carrier, and the T-DAI is used to indicate the total number of DCIs cumulatively transmitted until a current PDCCH monitoring occasion.

Optionally, the first generating module 73 includes at least one of following:
a first generating unit, configured to generate the HARQ-ACK of A*B bits for the PDSCH or the SPS PDSCH release scheduled by the DCI;
a first mapping unit, configured to map the HARQ-ACK of the A*B bits in a location, determined according to the DAI in the corresponding DCI, in the HARQ-ACK sub-codebook;
a first size determining unit, configured to determine the size of the HARQ-ACK sub-codebook according to the DAI in the DCI in the DCI group;
a second generating unit, configured to generate a NACK at a location, in the HARQ-ACK sub-codebook, where information is not received,
where A is the number of HARQ-ACK bits corresponding to each PDSCH or each SPS PDSCH release scheduled by one DCI, B is the number of PDSCHs scheduled by one DCI, and A and B are positive integers, the number of HARQ-ACK bits corresponding to each PDSCH is determined according to a parameter related to a transmission mode of the PDSCH.

Optionally, the first generating unit includes: a first ranking sub-unit, configured to perform ranking in an order of indexes of carriers in which transmissions of the scheduled plurality of PDSCHs are located and/or in an order of time-domain locations at which transmissions of the scheduled plurality of PDSCHs are located, when one DCI schedules the at least two PDSCHs, wherein the time-domain location is a slot or a sub-slot or a symbol.

Optionally, when the first DCI schedules at least two PDSCHs, the at least two PDSCHs include at least one of following:
at least two PDSCHs transmitted at different time-domain locations on one carrier;
at least two PDSCHs on a plurality of carriers, wherein each of the carriers carries one PDSCH;
at least two PDSCHs on a plurality of carriers, wherein at least one of the carriers carries multiple PDSCHs transmitted at different time-domain locations.

Optionally, the first grouping module 72 is configured to, when at least one of the following conditions is satisfied, group the DCIs according to the number of PDSCHs scheduled by each of the DCIs and obtain one or more DCI groups:
when the first DCI schedules at least two PDSCHs transmitted on a plurality of carriers, the plurality of carriers have the same subcarrier spacing;
when the first DCI schedules at least two PDSCHs transmitted on a plurality of carriers, there is no offset between indexes of slots or sub-slots corresponding the plurality of carriers;
when the first DCI schedules at least two PDSCHs transmitted on a plurality of carriers, the plurality of carriers have the same PDSCH processing capability;
the terminal is configured to employ a dynamic HARQ-ACK codebook.

This product embodiment corresponds to the method embodiment provided above, detailed description of the product embodiment is not repeated here, and please refer to the method embodiment for details.

Please refer to Fig. 8 which shows an embodiment not covered by the claims. Fig. 8 is a schematic structural diagram of a network side device provided in some embodiments of the present disclosure. The network side device 80 includes: a second transmitting module 81, configured to send one or more DCIs, wherein the one or more DCIs include one or more first DCIs used for scheduling at least two PDSCHs; a second receiving module 82, configured to receive a HARQ-ACK codebook and obtain a HARQ-ACK sub-codebook corresponding to each DCI group, wherein the DCI group is obtained by grouping the one or more DCIs according to the number of PDSCHs scheduled by each of the DCIs.

Optionally, the second receiving module 82 includes: a determining unit, configured to determine that at least two HARQ-ACK sub-codebooks are concatenated together in a predetermined order to form the HARQ-ACK codebook.

Optionally, the network side device further includes: a second grouping module, configured to group DCIs, of the one or more DCIs, scheduling the same number of PDSCHs into one group.

Optionally, the one or more DCIs further include a second DCI for scheduling the SPS PDSCH release or for scheduling one PDSCH; the second grouping module is configured to group the second DCI and one or more first DCIs scheduling one PDSCH into one group, and group one or more first DCIs scheduling a plurality of PDSCH into another group; or the second grouping module is configured to group the second DCI and the one or more first DCIs scheduling one PDSCH into one group, and group one or more first DCIs scheduling at least two PDSCHs according to the number of PDSCHs scheduled by each of the one or more first DCIs into one or more groups.

Optionally, the HARQ-ACK for the PDSCH or the SPS PDSCH release scheduled by each of the DCIs is transmitted in the same slot or sub-slot; and/or, the HARQ-ACK for the PDSCH or the SPS PDSCH release scheduled by each of the DCIs is transmitted in the same HARQ-ACK codebook.

Optionally, the second receiving module 82 includes: a sub-codebook determining unit, configured to determine the HARQ-ACK sub-codebook corresponding to each DCI group determined by the terminal according to the DAI in the DCI of the DCI group and the PDSCH or the SPS PDSCH release scheduled by the DCI in the DCI group; wherein the DAI in the DCI in the DCI group is used to indicate the number of DCIs in the DCI group.

Optionally, the DAI in the DCI includes a C-DAI; or the DAI in the DCI includes C-DAI and T-DAI; the C-DAI is used to indicate the number of DCIs cumulatively transmitted until a current PDCCH monitoring occasion of a current carrier, and the T-DAI is used to indicate the total number of DCIs cumulatively transmitted until a current PDCCH monitoring occasion.

Optionally, the sub-codebook determining unit includes at least one of the following:
a third generating unit, configured to generate HARQ-ACKs of A*B bits for PDSCHs or SPS PDSCH release scheduled by one DCI;
a second mapping unit, configured to map the HARQ-ACKs of the A*B bits in corresponding locations, determined according to the DAI in the DCI, in the HARQ-ACK sub-codebook;
a second size determining unit, configured to determine the size of the HARQ-ACK sub-codebook according to the DAIs in the DCIs in the DCI group;
a fourth generating unit, configured to generate a NACK for a location, in the HARQ-ACK sub-codebook, where a DCI is not received;
wherein A is the number of HARQ-ACK bits corresponding to each PDSCH or SPS PDSCH release scheduled by one DCI, B is the number of PDSCHs scheduled by the one DCI, and A and B are positive integers, the number of HARQ-ACK bits corresponding to each PDSCH is determined according to a parameter related to a transmission mode of the PDSCH.

Optionally, the third generating unit includes: A second ranking sub-unit, configured to, when at least two PDSCHs are scheduled by the one DCI, rank according to at least one order of an order of indexes of carriers on which the scheduled plurality of PDSCHs are located and an order of time-domain locations at which the scheduled plurality of PDSCHs are located, wherein the time-domain locations are slots or sub-slots or symbols.

Optionally, when the first DCI schedules at least two PDSCHs, the at least two PDSCHs includes at least one of the following: at least two PDSCHs transmitted at different time-domain locations and on one carrier; at least two PDSCHs on a plurality of carriers, wherein each of the plurality carriers carries one PDSCH; at least two PDSCHs on a plurality of carriers, wherein at least one of the carriers carries at least two PDSCHs transmitted at different time-domain locations.

Optionally, the network side device further includes: a second grouping module, configured to: when at least one of the following conditions is satisfied, group the DCIs according to the number of PDSCHs scheduled by each of the DCIs to obtain the DCI group:
when the first DCI schedules at least two PDSCHs transmitted on a plurality of carriers, the plurality of carriers have the same subcarrier spacing;
when the first DCI schedules at least two PDSCHs transmitted on a plurality of carriers, there is no offset between slot indexes or sub-slot indexes corresponding to the plurality of carriers;
when the first DCI schedules at least two PDSCHs transmitted on a plurality of carriers, the plurality of carriers have the same PDSCH processing capability;
the terminal is configured to employ a dynamic HARQ-ACK codebook.

The product embodiment corresponds to the method embodiment applied to the network side device, the detailed description thereof is omitted herein, and please refer to the method embodiment for details.

Please refer to Fig. 9. Fig. 9 is a schematic structural diagram of a terminal according to some embodiments of the present disclosure. The terminal 90 includes a processor 91, a memory 92, a transceiver 93 and a computer program stored on the memory 92 and executable on the processor 91; The processor 91 implements the following steps when executing the computer program: receiving one or more DCIs, wherein the one or more DCIs include one or more first DCIs used for scheduling at least two PDSCHs; grouping the one or more DCIs according to the number of PDSCHs scheduled by each of the one or more DCIs, to obtain one or more DCI groups; generating a HARQ-ACK sub-codebook for each of the one or more DCI groups; generating an HARQ-ACK codebook according to the HARQ-ACK sub-codebook for each DCI group; and transmitting the HARQ-ACK codebook.

Optionally, when executing the computer program, the processor 91 may further implement the following step: when the number of the DCI groups is at least two, generating an HARQ-ACK codebook according to the HARQ-ACK sub-codebook for each DCI group includes: concatenating at least two HARQ-ACK sub-codebooks together in a predetermined order to form the HARQ-ACK codebook.

Optionally, when executing the computer program, the processor 91 may further implement the following step: grouping the one or more DCIs according to the number of PDSCHs scheduled by each of the one or more DCIs includes: grouping, into one group, the DCIs scheduling the same number of PDSCHs.

Optionally, the one or more DCIs further include a second DCI used to schedule a downlink SPS resource release or schedule only one PDSCH. When executing the computer program, the processor 91 may further implement the following: grouping the one or more DCIs according to the number of PDSCHs scheduled by each of the one or more DCIs includes: grouping the second DCI and the first DCI scheduling one PDSCH into one group, grouping the first DCI scheduling at least two PDSCHs into another group; or grouping the second DCI and the first DCI scheduling one PDSCH into one group, and grouping the first DCIs scheduling at least two PDSCHs according to the number of PDSCHs scheduled by each of the first DCIs.

Optionally, the HARQ-ACK for the PDSCH or the SPS PDSCH release indicated by each of the one or more DCIs is transmitted in the same slot or sub-slot; and/or, the HARQ-ACK for the PDSCH or the SPS PDSCH release indicated by each of the one or more DCIs is transmitted in the same HARQ-ACK codebook.

Optionally, when executing the computer program, the processor 91 may further implement the following step: generating a HARQ-ACK sub-codebook for each of the one or more DCI groups includes: determining the HARQ-ACK sub-codebook corresponding to each of the DCI groups according to a DAI in a DCI in the DCI group and the PDSCH or the SPS PDSCH release scheduled by the DCI in the DCI group; wherein the DAI in the DCI in the DCI group is used to indicate the number of DCIs in the DCI group.

Optionally, the DAI in the DCI includes a C-DAI; or the DAI in the DCI includes a C-DAI and a T-DAI; wherein the C-DAI is used to indicate the number of DCIs cumulatively transmitted until a current PDCCH monitoring occasion of a current carrier, and the T-DAI is used to indicate the total number of DCIs cumulatively transmitted until a current PDCCH monitoring occasion.

Optionally, when executing the computer program, the processor 91 may further implement the following steps: determining the HARQ-ACK sub-codebook corresponding to each of the DCI groups according to a DAI in a DCI in the DCI group and the PDSCH or the SPS PDSCH release scheduled by the DCI in the DCI group includes at least one of following:
generating the HARQ-ACK of A*B bits for the PDSCH or the SPS PDSCH release scheduled by the DCI;
mapping the HARQ-ACK of the A*B bits in a location, determined according to the DAI in the corresponding DCI, in the HARQ-ACK sub-codebook;
determining the size of the HARQ-ACK sub-codebook according to the DAI in the DCI in the DCI group;
generating a NACK at a location, in the HARQ-ACK sub-codebook, where information is not received,
where A is the number of HARQ-ACK bits corresponding to each PDSCH or each SPS PDSCH release scheduled by one DCI, B is the number of PDSCHs scheduled by one DCI, and A and B are positive integers, the number of HARQ-ACK bits corresponding to each PDSCH is determined according to a parameter related to a transmission mode of the PDSCH.

Optionally, when executing the computer program, the processor 91 may further implement the following steps: generating the HARQ-ACK of A*B bits for the PDSCH or the SPS PDSCH release scheduled by the DCI includes: performing ranking in an order of indexes of carriers in which transmissions of the scheduled plurality of PDSCHs are located and/or in an order of time-domain locations at which transmissions of the scheduled plurality of PDSCHs are located, when one DCI schedules the at least two PDSCHs, wherein the time-domain location is a slot or a sub-slot or a symbol. Optionally, when the first DCI schedules at least two PDSCHs, the at least two PDSCHs include at least one of following:
at least two PDSCHs transmitted at different time-domain locations on one carrier;
at least two PDSCHs on a plurality of carriers, wherein each of the carriers carries one PDSCH;
at least two PDSCHs on a plurality of carriers, wherein at least one of the carriers carries multiple PDSCHs transmitted at different time-domain locations.

Optionally, when executing the computer program, the processor 91 implements the following steps:
when at least one of the following conditions is satisfied, grouping the DCIs according to the number of PDSCHs scheduled by each of the DCIs and obtaining one or more DCI groups:
when the first DCI schedules at least two PDSCHs transmitted on a plurality of carriers, the plurality of carriers have the same subcarrier spacing;
when the first DCI schedules at least two PDSCHs transmitted on a plurality of carriers, there is no offset between indexes of slots or sub-slots corresponding the plurality of carriers;
when the first DCI schedules at least two PDSCHs transmitted on a plurality of carriers, the plurality of carriers have the same PDSCH processing capability;
the terminal is configured to employ a dynamic HARQ-ACK codebook.

The specific operational process of the embodiments of the present disclosure is consistent with that of the method embodiment applied to the terminal, so the detailed description thereof is omitted herein, and please refer to the description of the steps in the method embodiment applied to the terminal for details.

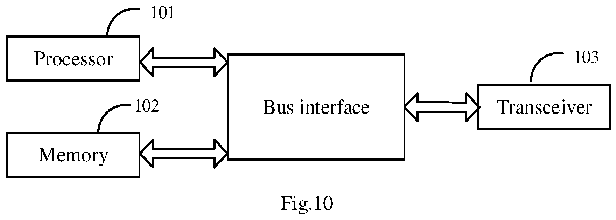

Please refer to Fig. 10. Fig. 10 is a schematic structural diagram of a network side device according to some embodiments of the present disclosure. The network side device 100 includes a processor 101, a memory 102, a transceiver 103 and a computer program stored on the memory 102 and executable on the processor 101. When executing the computer program, the processor 101 implements the following steps: transmitting one or more DCIs, wherein the one or more DCIs include one or more first DCIs used for scheduling at least two PDSCHs; receiving a HARQ-ACK codebook and obtaining a HARQ-ACK sub-codebook corresponding to each DCI group, wherein the DCI group is obtained by grouping the one or more DCIs according to the number of PDSCHs scheduled by each of the DCIs.

When executing the computer program, the processor 101 further implements: when the number of the DCI groups is at least two, obtaining the HARQ-ACK sub-codebook corresponding to each DCI group includes: determining that at least two HARQ-ACK sub-codebooks are concatenated together in a predetermined order to form the HARQ-ACK codebook.

Optionally, when executing the computer program, the processor 101 may further implement the following step: before transmitting the one or more DCIs, grouping DCIs, of the one or more DCIs, scheduling the same number of PDSCHs into one group.

Optionally, the one or more DCIs further include a second DCI for scheduling the SPS PDSCH release or for scheduling one PDSCH; and when executing the computer program, the processor 101 may further implement the following steps: grouping the second DCI and one or more first DCIs scheduling one PDSCH into one group, and grouping one or more first DCIs scheduling a plurality of PDSCH into another group; or grouping the second DCI and the one or more first DCIs scheduling one PDSCH into one group, and grouping one or more first DCIs scheduling at least two PDSCHs according to the number of PDSCHs scheduled by each of the one or more first DCIs into one or more groups.

Optionally, the HARQ-ACK for the PDSCH or the SPS PDSCH release scheduled by each of the DCIs is transmitted in the same slot or sub-slot; and/or, the HARQ-ACK for the PDSCH or the SPS PDSCH release scheduled by each of the DCIs is transmitted in the same HARQ-ACK codebook.

Optionally, when executing the computer program, the processor 101 may also implement the following steps: obtaining the HARQ-ACK sub-codebook corresponding to each DCI group includes: determining the HARQ-ACK sub-codebook corresponding to each DCI group determined by the terminal according to the DAI in the DCI of the DCI group and the PDSCH or the SPS PDSCH release scheduled by the DCI in the DCI group; wherein the DAI in the DCI in the DCI group is used to indicate the number of DCIs in the DCI group.

Optionally, the DAI in the DCI includes a C-DAI; or the DAI in the DCI includes C-DAI and T-DAI; the C-DAI is used to indicate the number of DCIs cumulatively transmitted until a current PDCCH monitoring occasion of a current carrier, and the T-DAI is used to indicate the total number of DCIs cumulatively transmitted until a current PDCCH monitoring occasion.

Optionally, when executing the computer program, the processor 101 may further implement the following steps: determining the HARQ-ACK sub-codebook corresponding to each DCI group determined by the terminal according to the DAI in the DCI of the DCI group and the PDSCH or the SPS PDSCH release scheduled by the DCI in the DCI group includes at least one of the following:
generating HARQ-ACKs of A*B bits for PDSCHs or SPS PDSCH release scheduled by one DCI;
mapping the HARQ-ACKs of the A*B bits in corresponding locations, determined according to the DAI in the DCI, in the HARQ-ACK sub-codebook;
determining the size of the HARQ-ACK sub-codebook according to the DAIs in the DCIs in the DCI group;
generating a NACK for a location, in the HARQ-ACK sub-codebook, where a DCI is not received;
wherein A is the number of HARQ-ACK bits corresponding to each PDSCH or SPS PDSCH release scheduled by one DCI, B is the number of PDSCHs scheduled by the one DCI, and A and B are positive integers, the number of HARQ-ACK bits corresponding to each PDSCH is determined according to a parameter related to a transmission mode of the PDSCH.

Optionally, when executing the computer program, the processor 101 may also implement the following steps: generating HARQ-ACKs of A*B bits for PDSCHs or SPS PDSCH release scheduled by one DCI includes: when at least two PDSCHs are scheduled by the one DCI, ranking according to at least one order of an order of indexes of carriers on which the scheduled plurality of PDSCHs are located and an order of time-domain locations at which the scheduled plurality of PDSCHs are located, wherein the time-domain locations are slots or sub-slots or symbols.

Optionally, when the first DCI schedules at least two PDSCHs, the at least two PDSCHs includes at least one of the following: at least two PDSCHs transmitted at different time-domain locations and on one carrier; at least two PDSCHs on a plurality of carriers, wherein each of the plurality carriers carries one PDSCH; at least two PDSCHs on a plurality of carriers, wherein at least one of the carriers carries at least two PDSCHs transmitted at different time-domain locations.

Optionally, when executing the computer program, the processor 101 may further implement the following steps: when at least one of the following conditions is satisfied, grouping the DCIs according to the number of PDSCHs scheduled by each of the DCIs to obtain the DCI group:
when the first DCI schedules at least two PDSCHs transmitted on a plurality of carriers, the plurality of carriers have the same subcarrier spacing;
when the first DCI schedules at least two PDSCHs transmitted on a plurality of carriers, there is no offset between slot indexes or sub-slot indexes corresponding to the plurality of carriers;
when the first DCI schedules at least two PDSCHs transmitted on a plurality of carriers, the plurality of carriers have the same PDSCH processing capability;
the terminal is configured to employ a dynamic HARQ-ACK codebook.

The specific operational process of some embodiments of the present disclosure is consistent with that of the method embodiment, so the detailed description thereof is omitted here, and please refer to the description of the steps in the method embodiment for details.

Some embodiments of the present disclosure provide a computer-readable storage medium having stored thereon a computer program, wherein when the computer program is executed by a processor, the processor implements the steps of the HARQ-ACK transmission method in any one of the above method embodiments. Please refer to the description of the steps in the above corresponding method embodiments for details.

The network side device in the embodiments of the present disclosure may be a base station (Base Transceiver Station, BTS for short) in Global System of Mobile Communications ( GSM for short) or Code Division Multiple Access (CDMA for short), or a base station (NodeB, NB for short) in Wideband Code Division Multiple Access (WCDMA for short), or an evolved base station (Evolutionary Node B, eNB or eNodeB for short) in LTE, or a relay station or an access point, or a base station or the like in a future 5G network, and is not limited thereto.

The terminal in the embodiments of the present disclosure may be a wireless terminal or a wired terminal, and the wireless terminal may be a device that provides voice and/or other service data connectivity to a user, a handheld device having a wireless connection function, or other processing device connected to a wireless modem. The wireless terminal may communicate with one or more core networks via a Radio Access Network (RAN for short), and the wireless terminal may be a mobile terminal, such as mobile phones (or so-called "cellular" phones) and computers with mobile terminals, for example, may be portable, pocket-sized, handheld, computer-built or vehicle-mounted mobile devices, they exchange language and/or data with the radio access network. For example, a Personal Communication Service (PCS) telephone, a cordless telephone, a Session Initiation Protocol (SIP) telephone, a Wireless Local Loop (WLL for short) station, a Personal Digital Assistant (PDA for short) and other devices. The wireless terminal may also be referred to as a system, a Subscriber Unit, a Subscriber Station, a Mobile Station, a Mobile terminal, a Remote Station, a Remote Terminal, an Access Terminal, a User Terminal, and a User Agent, a User Device or User Equipment, and is not limited thereto.

The computer readable storage media described above include transitory and non-transitory, removable and non-removable media, and storage of information may be implemented by any method or technology. The information may be computer readable instructions, data structures, modules of a program, or other data. Examples of computer storage media include, but are not limited to: Phase Change RAM (PRAM), Static Random Access Memory (SRAM), Dynamic Random Access Memory (DRAM), other types of Random Access Memory (RAM), Read Only Memory (ROM), Electrically Erasable Programmable Read Only Memory (EEPROM), Flash Memory or other memory technology, Compact Disk Read Only Memory (CD-ROM), Digital Versatile Disk (DVD) or other optical storage, magnetic tape cartridge, magnetic tape magnetic disk storage or other magnetic storage device or any other non-transmission medium may be used to store information that may be accessed by a computing device.

It should be noted that, division of modules in the network device and the terminal is only a division in respect of logical functions, and may be fully or partially integrated into one physical entity in actual implementation, or can be physically separated. In addition, that module can be all realized in the form of software invoked by a processing element, or be all realized in the form of hardware, or some modules can be realized in the form of software invoked by the processing element, and some modules are realized in the form of hardware. For example, the determination module may be a separate processing element, or may be integrated into one chip of the device, or may be stored in the memory of the device in the form of a program code to be invoked and executed by one of the processing elements of the device, to implement the function of the determination module. The implementation of the other modules is similar. In addition, all or part of these modules can be integrated together, or can be implemented independently. The processing element described herein may be an integrated circuit having signal processing capabilities. In implementation, the steps of the method described above or the modules described above may be performed by integrated logic circuitry of hardware in the processor element or by instructions in the form of software. For example, each module, unit, sub-unit, or sub-module may be one or more integrated circuits configured to implement the above methods, such as one or more Application Specific Integrated Circuits (ASIC), or one or more digital signal processors (DSP), or one or more Field Programmable Gate Arrays (FPGAs), etc. In another example, when one of that above modules is implemented in the form of a processing element scheduling a program code, the processing element may be a general purpose processor such as a Central Processing Unit (CPU) or other processors that can call the program code. As another example, these modules may be integrated together and implemented in the form of a system-on-a-chip (SOC).

Such terms as "first," "second," etc. in the specification and claims of the present application are used to distinguish similar objects and are not necessarily used to describe a particular order or order of precedence. It should be understood that the terms so used may be interchanged where appropriate so that the embodiments of the present application described herein may be implemented in an order other than those orders illustrated or described herein,. Furthermore, the terms "including" and "having" and any variations thereof, are intended to cover non-exclusive inclusion, for example, a process, method, system, product or device including a series of steps or units need not be limited to those steps or units that are clearly listed, but may include other steps or elements that are not explicitly listed or inherent to these processes, methods, products or devices. In addition, "and/or" as used in the specification and in the claims mean at least one of the connected objects, such as A and/or B and/or C means 7 cases which are A exists alone, B exists alone, C exists alone, both A and B exist, both B and C exist, both A and C exist, and all A, B and C exist. Similarly, the use of "at least one of A and B" in this specification and in the claims should be understood as "A alone, B alone, or both A and B."

The above describe optional embodiments of the present disclosure.

## Claims

1. A Hybrid Automatic Repeat Request Acknowledge, HARQ-ACK, transmission method performed by a terminal, comprising:
receiving (41) multiple Downlink Control Information, DCIs, wherein the multiple DCIs comprise one or more first DCIs,
wherein the one or more first DCI schedules a plurality of Physical Downlink Shared Channels, PDSCHs;
the method further comprises:
grouping (42) the multiple DCIs according to a quantity of PDSCH scheduled by each of the multiple DCIs, to obtain one or more DCI groups;
generating (43) a HARQ-ACK sub-codebook for each DCI group of the one or more DCI groups;
generating (44) an HARQ-ACK codebook according to the HARQ-ACK sub-codebook for each DCI group;
transmitting (45) the HARQ-ACK codebook.

2. The method according to claim 1, wherein,
when a quantity of the one or more DCI groups is at least two, generating (44) the HARQ-ACK codebook according to the HARQ-ACK sub-codebook for each DCI group comprises:
concatenating at least two HARQ-ACK sub-codebooks for the at least two DCI groups in a predetermined order to form the HARQ-ACK codebook.

3. The method according to claim 1, wherein, generating (43) the HARQ-ACK sub-codebook for each DCI group of the one or more DCI groups comprises:
determining the HARQ-ACK sub-codebook corresponding to each DCI group of the one or more DCI groups according to a Downlink Allocation Index, DAI, in a DCI in the DCI group and a PDSCH scheduled by the DCI in the DCI group or the Semi-Persistent Scheduling, SPS, PDSCH release indicated by the DCI in the DCI group;
wherein the DAI in the DCI in the DCI group is used to indicate the quantity of DCIs in the DCI group.

4. The method according to claim 1, wherein,
grouping (42) the multiple DCIs according to the quantity of PDSCHs scheduled by each of the multiple DCIs comprises:
grouping, into one group, DCIs scheduling the same quantity of PDSCHs;
and/or
HARQ-ACK for a PDSCH scheduled by each of the multiple DCIs or a Semi-Persistent Scheduling, SPS, PDSCH release indicated by each of the multiple DCIs is transmitted in the same slot or sub-slot; and/or HARQ-ACK for a PDSCH scheduled by each of the multiple DCIs or a SPS PDSCH release indicated by each of the multiple DCIs is transmitted in the same HARQ-ACK codebook.

5. The method according to claim 1, wherein,
when the first DCI schedules at least two PDSCHs, the at least two PDSCHs comprise at least one of following:
at least two PDSCHs transmitted at different time-domain locations on one carrier;
at least two PDSCHs on a plurality of carriers, wherein each of the carriers carries one PDSCH;
at least two PDSCHs on a plurality of carriers, wherein at least one of the carriers carries multiple PDSCHs transmitted at different time-domain locations.

6. The method according to claim 1, wherein, when at least one of following conditions is satisfied, the multiple DCIs are grouped according to a quantity of PDSCHs scheduled by each of the multiple DCIs, to obtain one or more DCI groups:
when the first DCI schedules at least two PDSCHs transmitted on a plurality of carriers, the plurality of carriers have the same subcarrier spacing;
when the first DCI schedules at least two PDSCHs transmitted on a plurality of carriers, there is no offset between indexes slot index or sub-slot index corresponding the plurality of carriers;
when the first DCI schedules at least two PDSCHs transmitted on a plurality of carriers, the plurality of carriers have the same PDSCH processing capability;
the terminal is configured with a dynamic HARQ-ACK codebook.

7. The method according to claim 4, wherein, when grouping, into one group, DCIs scheduling the same quantity of PDSCHs, the multiple DCIs further comprise a second DCI used to indicate a Semi-Persistent Scheduling, SPS, PDSCH release or schedule one PDSCH;
grouping (42) the multiple DCIs according to the quantity of PDSCHs scheduled by each of the multiple DCIs comprises:
grouping, into one group, a first DCI scheduling one PDSCH from the one or more first DCIs and the second DCI, grouping, into another group, one or more first DCIs scheduling at least two PDSCHs; or
grouping, into one group, a first DCI scheduling one PDSCH from the one or more first DCIs and the second DCI, and grouping one or more first DCIs scheduling at least two PDSCHs according to the quantity of PDSCHs scheduled by each of the one or more first DCIs.

8. The method according to claim 3, wherein when determining the HARQ-ACK sub-codebook corresponding to each DCI group of the one or more DCI groups according to the DAI in the DCI in the DCI group and a PDSCH scheduled by the DCI in the DCI group or the SPS PDSCH release indicated by the DCI in the DCI group, determining the HARQ-ACK sub-codebook corresponding to the each DCI group of the one or more DCI groups according to the DAI in the DCI in the DCI group and the PDSCH scheduled by the DCI in the DCI group or the SPS PDSCH release indicated by the DCI in the DCI group comprising at least one of the following:
generating HARQ-ACKs of A*B bits for the PDSCHs scheduled by the DCI or the SPS PDSCH release indicated by the DCI;
mapping the HARQ-ACKs of the A*B bits to locations, determined according to the DAI in the corresponding DCI, in the HARQ-ACK sub-codebook;
determining a size of the HARQ-ACK sub-codebook according to the DAI in the DCI in the DCI group;
generating a Negative Acknowledge, NACK, at a location, in the HARQ-ACK sub-codebook, where information is not received,
wherein A is a quantity of HARQ-ACK bits corresponding to each PDSCH scheduled by the DCI or each SPS PDSCH release indicated by the DCI, B is a quantity of PDSCHs scheduled by the DCI, and A and B are positive integers, the quantity of HARQ-ACK bits corresponding to each PDSCH is determined according to a parameter related to a transmission mode of the PDSCH,
wherein generating the HARQ-ACKs of A*B bits for the PDSCHs scheduled by the DCI or the SPS PDSCH release indicated by the DCI comprises:
when one DCI schedules at least two PDSCHs, ranking the A-bit HARQ-ACK for each PDSCH of the scheduled at least two PDSCHs in an order of indexes of carriers in which the scheduled plurality of PDSCHs are located and/or in an order of time-domain locations at which the scheduled plurality of PDSCHs are located, wherein the time-domain location is a slot or a sub-slot or a symbol set.

9. A Hybrid Automatic Repeat Request Acknowledge, HARQ-ACK, transmission method, performed by a network side device, comprising:
transmitting (61) multiple Downlink Control Information, DCIs, wherein the multiple DCIs comprise one or more first DCIs,
wherein
the one or more first DCI schedules a plurality of Physical Downlink Shared Channel, PDSCHs;
the method further comprises:
receiving (62) a HARQ-ACK codebook and obtaining (62) a HARQ-ACK sub-codebook corresponding to each DCI group of one or more DCI groups, wherein the one or more DCI groups are obtained by grouping the multiple DCIs according to a quantity of PDSCHs scheduled by each of the multiple DCIs.

10. The method according to claim 9, wherein,
when a quantity of the one or more DCI groups is at least two, obtaining (62) the HARQ-ACK sub-codebook corresponding to each DCI group of the one or more DCI groups comprises:
determining that at least two HARQ-ACK sub-codebooks are concatenated together in a predetermined order to form the HARQ-ACK codebook.

11. The method according to claim 9, wherein, obtaining (62) the HARQ-ACK sub-codebook corresponding to each DCI group of one or more DCI groups comprises:
determining the HARQ-ACK sub-codebook corresponding to each DCI group of the one or more DCI groups determined by the terminal according to a Downlink Allocation Index, DAI, in a DCI in the DCI group and the PDSCH scheduled by the DCI in the DCI group or the Semi-Persistent Scheduling, SPS, PDSCH release indicated by the DCI in the DCI group;
wherein the DAI in the DCI in the DCI group is used to indicate the quantity of DCIs in the DCI group.

12. The method according to claim 9, wherein, before transmitting (61) the multiple DCIs, the method further comprises:
grouping DCIs, of the multiple DCIs, scheduling the same quantity of PDSCHs into one group;
and/or
HARQ-ACK for a PDSCH scheduled by a DCI of the multiple DCIs or a Semi-Persistent Scheduling, SPS, PDSCH release indicated by a DCI of the multiple DCIs is transmitted in the same slot or sub-slot; and/or HARQ-ACK for a PDSCH scheduled by a DCI of the multiple DCIs or a SPS PDSCH release indicated by a DCI of the multiple DCIs is transmitted in the same HARQ-ACK codebook.

13. The method according to claim 9, wherein, when the first DCI schedules at least two PDSCHs, the at least two PDSCHs comprise at least one of following:
at least two PDSCHs transmitted at different time-domain locations on one carrier;
at least two PDSCHs on a plurality of carriers, wherein each of the carriers carries one PDSCH;
at least two PDSCHs on a plurality of carriers, wherein at least one of the carriers carries multiple PDSCHs transmitted at different time-domain locations.

14. The method according to claim 9, wherein, when at least one of following conditions is satisfied, the multiple DCIs are grouped according to a quantity of PDSCHs scheduled by each of the multiple DCIs, to obtain one or more DCI groups:
when the first DCI schedules at least two PDSCHs transmitted on a plurality of carriers, the plurality of carriers have the same subcarrier spacing;
when the first DCI schedules at least two PDSCHs transmitted on a plurality of carriers, there is no offset between indexes of slots or sub-slots corresponding the plurality of carriers;
when the first DCI schedules at least two PDSCHs transmitted on a plurality of carriers, the plurality of carriers have the same PDSCH processing capability;
the terminal is configured with a dynamic HARQ-ACK codebook.

15. The method according to claim 12, wherein when grouping DCIs, of the multiple DCIs, scheduling the same quantity of PDSCHs into one group, the multiple DCIs further comprise a second DCI for indicating a Semi-Persistent Scheduling, SPS, PDSCH release or for scheduling one PDSCH;
before transmitting (61) the multiple DCIs, the method further comprises:
grouping, into one group, the first DCI scheduling one PDSCH from the one or more first DCIs and the second DCI, and grouping, into another group, one or more first DCIs scheduling at least two PDSCHs; or
grouping, into one group, the first DCI scheduling one PDSCH from the one or more first DCIs and the second DCI, and grouping one or more first DCIs scheduling at least two PDSCHs according to the quantity of PDSCHs scheduled by each of the one or more first DCIs.

16. The method according to claim 11, wherein when determining the HARQ-ACK sub-codebook corresponding to each DCI group of the one or more DCI groups determined by the terminal according to the DAI in a DCI in the DCI group and the PDSCH scheduled by the DCI in the DCI group or the SPS PDSCH release indicated by the DCI in the DCI group, determining the HARQ-ACK sub-codebook corresponding to each DCI group of the one or more DCI groups determined by the terminal according to the DAI in the DCI in the DCI group and the PDSCH scheduled by the DCI in the DCI group or the SPS PDSCH release indicated by the DCI in the DCI group comprises at least one of the following:
generating HARQ-ACKs of A*B bits for the PDSCHs scheduled by the DCI or the SPS PDSCH release indicated by the DCI;
mapping the HARQ-ACKs of the A*B bits to locations, determined according to the DAI in the corresponding DCI, in the HARQ-ACK sub-codebook;
determining a size of the HARQ-ACK sub-codebook according to the DAI in the DCI in the DCI group;
generating a Negative Acknowledge, NACK, at a location, in the HARQ-ACK sub-codebook, where information is not received,
wherein A is a quantity of HARQ-ACK bits corresponding to each PDSCH scheduled by the DCI or each SPS PDSCH release indicated by the DCI, B is a quantity of PDSCHs scheduled by the DCI, and A and B are positive integers, the quantity of HARQ-ACK bits corresponding to each PDSCH is determined according to a parameter related to a transmission mode of the PDSCH,
wherein generating the HARQ-ACKs of A*B bits for the PDSCHs scheduled by the DCI or the SPS PDSCH release indicated by the DCI comprises:
when one DCI schedules at least two PDSCHs, ranking the A-bit HARQ-ACK for each PDSCH of the scheduled at least two PDSCHs in an order of indexes of carriers in which the scheduled plurality of PDSCHs are located and/or in an order of time-domain locations at which the scheduled plurality of PDSCHs are located, wherein the time-domain location is a slot or a sub-slot or a symbol set.

17. A terminal, comprising a memory (92), a processor (91), a transceiver (93) and a computer program stored on the memory (92) and executable on the processor (91); **characterized in that**, when the processor (91) executes the computer program, the processor (91) implements the steps of the HARQ-ACK transmission method according to any one of claims 1 to 8.

18. A network side device, comprising: a memory (102), a processor (101), a transceiver (103), and a computer program stored on the memory (102) and executable on the processor (101), **characterized in that**, when the processor (101) executes the computer program, the processor (101) implements the steps of the HARQ-ACK transmission method according to any one of claims 9 to 16.

## Patentansprüche

1. Hybrid-Automatic-Repeat-Request-Acknowledge-Übertragungsverfahren, HARQ-ACK-Übertragungsverfahren, das durch ein Endgerät durchgeführt wird, umfassend:
Empfangen (41) mehrerer Downlink Steuerinformationen, DCIs, wobei die mehreren DCIs eine oder mehrere erste DCIs umfassen, wobei die eine oder die mehreren ersten DCIs eine Vielzahl von Physical Downlink Shared Channels, PDSCHs, planen;
wobei das Verfahren ferner umfasst:
Gruppieren (42) der mehreren DCIs gemäß einer Anzahl von durch jede der mehreren DCIs geplanten PDSCHs, um eine oder mehrere DCI-Gruppen zu erhalten;
Erzeugen (43) eines HARQ-ACK-Teilcodebuchs für jede DCI-Gruppe der einen oder mehreren DCI-Gruppen;
Erzeugen (44) eines HARQ-ACK-Codebuchs gemäß dem HARQ-ACK-Teilcodebuch für jede DCI-Gruppe;
Übertragen (45) des HARQ-ACK-Codebuchs.

2. Verfahren nach Anspruch 1, wobei,
wenn eine Anzahl der einen oder der mehreren DCI-Gruppen mindestens zwei beträgt, das Erzeugen (44) des HARQ-ACK-Codebuchs gemäß dem HARQ-ACK-Teilcodebuch für jede DCI-Gruppe umfasst:
Verketten von mindestens zwei HARQ-ACK-Teilcodebüchern für die mindestens zwei DCI-Gruppen in einer vorgegebenen Reihenfolge, um das HARQ-ACK-Codebuch zu bilden.

3. Verfahren nach Anspruch 1, wobei das Erzeugen (43) des HARQ-ACK-Teilcodebuchs für jede DCI-Gruppe der einen oder der mehreren DCI-Gruppen umfasst:
Ermitteln des HARQ-ACK-Teilcodebuchs, das jeder DCI-Gruppe der einen oder der mehreren DCI-Gruppen entspricht, gemäß einem Downlink Allocation Index, DAI, in einer DCI in der DCI-Gruppe und einem PDSCH, der durch die DCI in der DCI-Gruppe geplant wird, oder der Semi-Persistent-Scheduling-PDSCH-Freigabe, SPS-PDSCH-Freigabe, die durch die DCI in der DCI-Gruppe angegeben wird;
wobei der DAI in der DCI in der DCI-Gruppe verwendet wird, um die Anzahl der DCIs in der DCI-Gruppe anzugeben.

4. Verfahren nach Anspruch 1, wobei,
das Gruppieren (42) der mehreren DCIs gemäß der Anzahl von PDSCHs, die durch jede der mehreren DCIs geplant werden, umfasst:
Gruppieren, in eine Gruppe, von DCIs, die die gleiche Anzahl von PDSCHs planen;
und/oder
HARQ-ACK für einen PDSCH, der durch jede der mehreren DCIs oder eine Semi-Persistent-Scheduling-PDSCH-Freigabe, SPS-PDSCH-Freigabe, geplant wird, die durch jede der mehreren DCIs angegeben wird, im selben Slot oder Teil-Slot übertragen wird; und/oder HARQ-ACK für einen durch jede der mehreren DCIs geplanten PDSCH oder eine durch jede der mehreren DCIs angegebene SPS-PDSCH-Freigabe in demselben HARQ-ACK-Codebuch übertragen wird.

5. Verfahren nach Anspruch 1, wobei,
wenn die erste DCI mindestens zwei PDSCHs plant, die mindestens zwei PDSCHs mindestens eines der Folgenden umfassen:
mindestens zwei PDSCHs, die an unterschiedlichen Zeitbereichspositionen auf einem Träger übertragen werden;
mindestens zwei PDSCHs auf einer Vielzahl von Trägern, wobei jeder der Träger einen PDSCH trägt;
mindestens zwei PDSCHs auf einer Vielzahl von Trägern, wobei mindestens einer der Träger mehrere PDSCHs trägt, die an unterschiedlichen Zeitbereichspositionen übertragen werden.

6. Verfahren nach Anspruch 1, wobei, wenn mindestens eine der folgenden Bedingungen erfüllt ist, die mehreren DCIs gemäß einer Anzahl von PDSCHs gruppiert werden, die durch jede der mehreren DCIs geplant werden, um eine oder mehrere DCI-Gruppen zu erhalten:
wenn die erste DCI mindestens zwei PDSCHs plant, die auf einer Vielzahl von Trägern übertragen werden, die Vielzahl von Trägern denselben Hilfsträgerabstand aufweisen;
wenn die erste DCI mindestens zwei PDSCHs plant, die auf einer Vielzahl von Trägern übertragen werden, kein Offset zwischen dem Slot-Index oder Teil-Slot-Indes von Indizes vorliegt, die der Vielzahl von Trägern entsprechen;
wenn die erste DCI mindestens zwei auf einer Vielzahl von Trägern übertragene PDSCHs plant, die Vielzahl von Trägern die gleiche PDSCH-Verarbeitungsfähigkeit aufweisen;
das Endgerät mit einem dynamischen HARQ-ACK-Codebuch konfiguriert ist.

7. Verfahren nach Anspruch 4, wobei, wenn DCIs in eine Gruppe gruppiert werden, die die gleiche Anzahl von PDSCHs planen, die mehreren DCIs ferner eine zweite DCI umfassen, die verwendet wird, um eine Semi-Persistent-Scheduling-PDSCH-Freigabe, SPS-PDSCH-Freigabe, anzugeben oder einen PDSCH zu planen;
das Gruppieren (42) der mehreren DCIs gemäß der Anzahl von PDSCHs, die durch jede der mehreren DCIs geplant werden, umfasst:
Gruppieren, in eine Gruppe, einer ersten DCI, die einen PDSCH plant, aus der einen oder den mehreren ersten DCIs und der zweiten DCI, Gruppieren, in eine andere Gruppe, einer oder mehrerer erster DCIs, die mindestens zwei PDSCHs planen; oder
Gruppieren, in eine Gruppe, einer ersten DCI, die einen PDSCH plant, aus der einen oder den mehreren ersten DCIs und der zweiten DCI, und Gruppieren einer oder mehrerer erster DCIs, die mindestens zwei PDSCHs planen, gemäß der Anzahl von PDSCHs, die durch jede der einen oder mehreren ersten DCIs geplant werden.

8. Verfahren nach Anspruch 3, wobei beim Ermitteln des HARQ- ACK-Teilcodebuchs, das jeder DCI-Gruppe der einen oder mehreren DCI-Gruppen entspricht, gemäß dem DAI in der DCI in der DCI-Gruppe und einem durch die DCI in der DCI-Gruppe geplanten PDSCH oder der durch die DCI in der DCI-Gruppe angegebenen SPS-PDSCH-Freigabe das Ermitteln des HARQ-ACK-Teilcodebuchs, das jeder DCI-Gruppe der einen oder mehreren DCI-Gruppen entspricht, gemäß dem DAI in der DCI in der DCI-Gruppe und dem durch die DCI in der DCI-Gruppe geplanten PDSCH oder der durch die DCI in der DCI-Gruppe angegebenen SPS-PDSCH-Freigabe mindestens eines der Folgenden umfasst:
Erzeugen von HARQ-ACKs von A*B Bits für die durch die DCI geplanten PDSCHs oder die durch die DCI angegebene SPS-PDSCH-Freigabe;
Zuordnen der HARQ-ACKs der A*B Bits zu Positionen, die gemäß dem DAI in der entsprechenden DCI ermittelt werden, im HARQ-ACK-Teilcodebuch;
Ermitteln einer Größe des HARQ-ACK-Teilcodebuchs gemäß dem DAI in der DCI in der DCI-Gruppe;
Erzeugen eines Negative Acknowledge, NACK, an einer Position in dem HARQ-ACK-Teilcodebuch, an der keine Informationen empfangen werden,
wobei A eine Anzahl von HARQ-ACK-Bits ist, die jedem durch die DCI geplanten PDSCH oder jeder durch die DCI angegebenen SPS-PDSCH-Freigabe entsprechen, B eine Anzahl von durch die DCI geplanten PDSCHs ist und A und B positive ganze Zahlen sind, die Anzahl von HARQ-ACK-Bits, die jedem PDSCH entsprechen, gemäß einem Parameter ermittelt wird, der sich auf einen Übertragungsmodus des PDSCH bezieht,
wobei das Erzeugen der HARQ-ACKs von A*B Bits für die durch die DCI geplanten PDSCHs oder die durch die DCI angegebene SPS-PDSCH-Freigabe umfasst:
wenn eine DCI mindestens zwei PDSCHs plant, Einordnen der A-Bit-HARQ-ACK für jeden PDSCH der geplanten mindestens zwei PDSCHs in einer Reihenfolge von Indizes von Trägern, in denen sich die geplante Vielzahl von PDSCHs befindet, und/oder in einer Reihenfolge von Zeitbereichspositionen, an denen sich die geplante Vielzahl von PDSCHs befindet, wobei die Zeitbereichsposition ein Slot oder ein Teil-Slot oder ein Symbolsatz ist.

9. Hybrid-Automatic-Repeat-Request-Acknowledge-Übertragungsverfahren, HARQ-ACK-Übertragungsverfahren, das durch eine netzwerkseitige Vorrichtung durchgeführt wird, umfassend:
Übertragen (61) mehrerer Downlink-Steuerinformationen, DCIs, wobei die mehreren DCIs eine oder mehrere erste DCIs umfassen, wobei die eine oder die mehreren ersten DCIs eine Vielzahl von Physical Downlink Shared Channels, PDSCHs, planen;
wobei das Verfahren ferner umfasst:
Empfangen (62) eines HARQ-ACK-Codebuchs und Erhalten (62) eines HARQ-ACK-Teilcodebuchs entsprechend jeder DCI-Gruppe von einer oder mehreren DCI-Gruppen, wobei die eine oder die mehreren DCI-Gruppen durch Gruppieren der mehreren DCIs gemäß einer Anzahl von PDSCHs erhalten werden, die durch jede der mehreren DCIs geplant werden.

10. Verfahren nach Anspruch 9, wobei,
wenn eine Anzahl der einen oder der mehreren DCI-Gruppen mindestens zwei beträgt, das Erhalten (62) des HARQ-ACK-Teilcodebuchs, das jeder DCI-Gruppe der einen oder mehreren DCI-Gruppen entspricht, umfasst:
Feststellen, dass mindestens zwei HARQ-ACK-Teilcodebücher in einer vorgegebenen Reihenfolge miteinander verkettet sind, um das HARQ-ACK-Codebuch zu bilden.

11. Verfahren nach Anspruch 9, wobei das Erhalten (62) des HARQ-ACK-Teilcodebuchs, das jeder DCI-Gruppe von einer oder mehreren DCI-Gruppen entspricht, umfasst: Ermitteln des HARQ-ACK-Teilcodebuchs, das jeder DCI-Gruppe der einen oder der mehreren DCI-Gruppen entspricht, die durch das Endgerät ermittelt wurden, gemäß einem Downlink Allocation Index, DAI, in einer DCI in der DCI-Gruppe und dem PDSCH, der durch die DCI in der DCI-Gruppe geplant wird, oder der Semi-Persistent-Scheduling-PDSCH-Freigabe, SPS-PDSCH-Freigabe, die durch die DCI in der DCI-Gruppe angegeben wird;
wobei der DAI in der DCI in der DCI-Gruppe verwendet wird, um die Anzahl der DCIs in der DCI-Gruppe anzugeben.

12. Verfahren nach Anspruch 9, wobei vor dem Übertragen (61) der mehreren DCIs das Verfahren ferner umfasst:
Gruppieren von DCIs der mehreren DCIs, die die gleiche Anzahl von PDSCHs planen, in eine Gruppe;
und/oder
HARQ-ACK für einen PDSCH, der durch eine DCI der mehreren DCIs oder eine Semi-Persistent-Scheduling-PDSCH-Freigabe, SPS-PDSCH-Freigabe, geplant wird, die durch eine DCI der mehreren DCIs angegeben wird, im selben Slot oder Teil-Slot übertragen wird; und/oder HARQ-ACK für einen durch eine DCI der mehreren DCIs geplanten PDSCH oder eine durch eine DCI der mehreren DCIs angegebene SPS-PDSCH-Freigabe in demselben HARQ-ACK-Codebuch übertragen wird.

13. Verfahren nach Anspruch 9, wobei, wenn die erste DCI mindestens zwei PDSCHs plant, die mindestens zwei PDSCHs mindestens eines der Folgenden umfassen:
mindestens zwei PDSCHs, die an unterschiedlichen Zeitbereichspositionen auf einem Träger übertragen werden;
mindestens zwei PDSCHs auf einer Vielzahl von Trägern, wobei jeder der Träger einen PDSCH trägt;
mindestens zwei PDSCHs auf einer Vielzahl von Trägern, wobei mindestens einer der Träger mehrere PDSCHs trägt, die an unterschiedlichen Zeitbereichspositionen übertragen werden.

14. Verfahren nach Anspruch 9, wobei, wenn mindestens eine der folgenden Bedingungen erfüllt ist, die mehreren DCIs gemäß einer Anzahl von PDSCHs gruppiert werden, die durch jede der mehreren DCIs geplant werden, um eine oder mehrere DCI-Gruppen zu erhalten:
wenn die erste DCI mindestens zwei PDSCHs plant, die auf einer Vielzahl von Trägern übertragen werden, die Vielzahl von Trägern denselben Hilfsträgerabstand aufweisen;
wenn die erste DCI mindestens zwei PDSCHs plant, die auf einer Vielzahl von Trägern übertragen werden, kein Offset zwischen Indizes von Slots oder Teil-Slots vorliegt, die der Vielzahl von Trägern entsprechen;
wenn die erste DCI mindestens zwei auf einer Vielzahl von Trägern übertragene PDSCHs plant, die Vielzahl von Trägern die gleiche PDSCH-Verarbeitungsfähigkeit aufweisen;
das Endgerät mit einem dynamischen HARQ-ACK-Codebuch konfiguriert ist.

15. Verfahren nach Anspruch 12, wobei beim Gruppieren von DCIs, von den mehreren DCIs, die die gleiche Anzahl von PDSCHs planen, in eine Gruppe, die mehreren DCIs ferner eine zweite DCI zum Angeben einer Semi-Persistent-Scheduling-Freigabe, SPS-PDSCH-Freigabe, oder zum Planen eines PDSCH umfassen;
vor dem Übertragen (61) der mehreren DCIs das Verfahren ferner umfasst:
Gruppieren, in eine Gruppe, der ersten DCI, die einen PDSCH plant, aus der einen oder den mehreren ersten DCIs und der zweiten DCI, Gruppieren, in eine andere Gruppe, einer oder mehrerer erster DCIs, die mindestens zwei PDSCHs planen; oder
Gruppieren, in eine Gruppe, der ersten DCI, die einen PDSCH plant, aus der einen oder den mehreren ersten DCIs und der zweiten DCI, und Gruppieren einer oder mehrerer erster DCIs, die mindestens zwei PDSCHs planen, gemäß der Anzahl von PDSCHs, die durch jede der einen oder mehreren ersten DCIs geplant werden.

16. Verfahren nach Anspruch 11, wobei beim Ermitteln des HARQ- ACK-Teilcodebuchs, das jeder DCI-Gruppe der einen oder mehreren DCI-Gruppen entspricht, die durch das Endgerät ermittelt wurden, gemäß dem DAI in einer DCI in der DCI-Gruppe und einem durch die DCI in der DCI-Gruppe geplanten PDSCH oder der durch die DCI in der DCI-Gruppe angegebenen SPS-PDSCH-Freigabe das Ermitteln des HARQ-ACK-Teilcodebuchs, das jeder DCI-Gruppe der einen oder mehreren DCI-Gruppen entspricht, die durch das Endgerät ermittelt wurden, gemäß dem DAI in der DCI in der DCI-Gruppe und dem durch die DCI in der DCI-Gruppe geplanten PDSCH oder der durch die DCI in der DCI-Gruppe angegebenen SPS-PDSCH-Freigabe mindestens eines der Folgenden umfasst:
Erzeugen von HARQ-ACKs von A*B Bits für die durch die DCI geplanten PDSCHs oder die durch die DCI angegebene SPS-PDSCH-Freigabe;
Zuordnen der HARQ-ACKs der A*B Bits zu Positionen, die gemäß dem DAI in der entsprechenden DCI ermittelt werden, im HARQ-ACK-Teilcodebuch;
Ermitteln einer Größe des HARQ-ACK-Teilcodebuchs gemäß dem DAI in der DCI in der DCI-Gruppe;
Erzeugen eines Negative Acknowledge, NACK, an einer Position in dem HARQ-ACK-Teilcodebuch, an der keine Informationen empfangen werden,
wobei A eine Anzahl von HARQ-ACK-Bits ist, die jedem durch die DCI geplanten PDSCH oder jeder durch die DCI angegebenen SPS-PDSCH-Freigabe entsprechen, B eine Anzahl von durch die DCI geplanten PDSCHs ist und A und B positive ganze Zahlen sind, die Anzahl von HARQ-ACK-Bits, die jedem PDSCH entsprechen, gemäß einem Parameter ermittelt wird, der sich auf einen Übertragungsmodus des PDSCH bezieht,
wobei das Erzeugen der HARQ-ACKs von A*B Bits für die durch die DCI geplanten PDSCHs oder die durch die DCI angegebene SPS-PDSCH-Freigabe umfasst:
wenn eine DCI mindestens zwei PDSCHs plant, Einordnen der A-Bit-HARQ-ACK für jeden PDSCH der geplanten mindestens zwei PDSCHs in einer Reihenfolge von Indizes von Trägern, in denen sich die geplante Vielzahl von PDSCHs befindet, und/oder in einer Reihenfolge von Zeitbereichspositionen, an denen sich die geplante Vielzahl von PDSCHs befindet, wobei die Zeitbereichsposition ein Slot oder ein Teil-Slot oder ein Symbolsatz ist.

17. Endgerät, das einen Speicher (92), einen Prozessor (91), einen Transceiver (93) und ein Computerprogramm umfasst, das in dem Speicher (92) gespeichert und auf dem Prozessor (91) ausführbar ist; **dadurch gekennzeichnet, dass**, wenn der Prozessor (91) das Computerprogramm ausführt, der Prozessor (91) die Schritte des HARQ-ACK-Übertragungsverfahrens nach einem der Ansprüche 1 bis 8 implementiert.

18. Netzwerkseitige Vorrichtung, die umfasst: einen Speicher (102), einen Prozessor (101), einen Transceiver (103) und ein in dem Speicher (102) gespeichertes und auf dem Prozessor (101) ausführbares Programm,
**dadurch gekennzeichnet, dass**, wenn der Prozessor (101) das Computerprogramm ausführt, der Prozessor (101) die Schritte des HARQ-ACK-Übertragungsverfahrens nach einem der Ansprüche 9 bis 16 implementiert.

## Revendications

1. Procédé de transmission d'accusé de réception de demande de répétition automatique hybride, HARQ-ACK, mis en œuvre par un terminal, comprenant :
la réception (41) de multiples informations de commande de liaison descendante, DCI, dans lequel les multiples DCI comprennent une ou plusieurs premières DCI, dans lequel la ou les premières DCI planifient une pluralité de canaux partagés de liaison descendante physique, PDSCH ;
le procédé comprend en outre :
le regroupement (42) des multiples DCI selon une quantité de PDSCH planifiés par chacune des multiples DCI, pour obtenir un ou plusieurs groupes de DCI ;
la génération (43) d'un sous-livre de codes HARQ-ACK pour chaque groupe de DCI du ou des groupes de DCI ;
la génération (44) d'un livre de codes HARQ-ACK selon le sous-livre de codes HARQ-ACK pour chaque groupe de DCI ;
la transmission (45) du livre de codes HARQ-ACK.

2. Procédé selon la revendication 1, dans lequel,
lorsqu'une quantité du ou des groupes de DCI vaut au moins deux, la génération (44) du livre de codes HARQ-ACK selon le sous-livre de codes HARQ-ACK pour chaque groupe de DCI comprend :
la concaténation d'au moins deux sous-livres de codes HARQ-ACK pour les au moins deux groupes de DCI dans un ordre prédéterminé pour former le livre de codes HARQ-ACK.

3. Procédé selon la revendication 1, dans lequel, la génération (43) du sous-livre de codes HARQ-ACK pour chaque groupe de DCI du ou des groupes de DCI comprend :
la détermination du sous-livre de codes HARQ-ACK correspondant à chaque groupe de DCI du ou des groupes de DCI selon un indice d'allocation de liaison descendante, DAI, dans une DCI dans le groupe de DCI et d'un PDSCH planifié par la DCI dans le groupe de DCI ou la version de PDSCH de planification semi-persistante, SPS indiquée par la DCI dans le groupe de DCI ;
dans lequel le DAI dans la DCI dans le groupe de DCI est utilisé pour indiquer la quantité de DCI dans le groupe de DCI.

4. Procédé selon la revendication 1, dans lequel,
le regroupement (42) des multiples DCI selon la quantité de PDSCH planifiés par chacune des multiples DCI comprend :
le regroupement, dans un groupe, des DCI planifiant la même quantité de PDSCH ;
et/ou
un HARQ-ACK pour un PDSCH planifié par chacune des multiples DCI ou une version de PDSCH de planification semi-persistante, SPS indiquée par chacune des multiples DCI est transmis dans le même créneau ou sous-créneau ; et/ou un HARQ-ACK pour un PDSCH planifié par chacune des multiples DCI ou une version de PDSCH SPS indiquée par chacune des multiples DCI est transmis dans le même livre de codes HARQ-ACK.

5. Procédé selon la revendication 1, dans lequel,
lorsque la première DCI planifie au moins deux PDSCH, les au moins deux PDSCH comprennent au moins l'un parmi ce qui suit :
au moins deux PDSCH transmis au niveau de localisations de domaine temporel différentes sur une porteuse ;
au moins deux PDSCH sur une pluralité de porteuses, dans lequel chacune des porteuses transporte un PDSCH ;
au moins deux PDSCH sur une pluralité de porteuses, dans lequel au moins l'une des porteuses transporte de multiples PDSCH transmis au niveau de localisations de domaine temporel différentes.

6. Procédé selon la revendication 1, dans lequel, lorsque au moins l'une des conditions est respectée, les multiples DCI sont regroupés selon une quantité de PDSCH planifiés par chacune des multiples DCI, pour obtenir un ou plusieurs groupes de DCI :
lorsque la première DCI planifie au moins deux PDSCH transmis sur une pluralité de porteuses, la pluralité de porteuses ont le même espacement de sous-porteuse ;
lorsque la première DCI planifie au moins deux PDSCH transmis sur une pluralité de porteuses, il n'y a aucun décalage entre les indices indice de créneau ou indice de sous-créneau correspondant à la pluralité de porteuses ;
lorsque la première DCI planifie au moins deux PDSCH transmis sur une pluralité de porteuses, la pluralité de porteuses ont la même capacité de traitement de PDSCH ;
le terminal est configuré avec un livre de codes HARQ-ACK dynamique.

7. Procédé selon la revendication 4, dans lequel, lors d'un regroupement, dans un groupe, de DCI planifiant la même quantité de PDSCH, les multiples DCI comprennent en outre une seconde DCI utilisée pour indiquer une version de PDSCH de planification semi-persistante, SPS ou planifier un PDSCH ;
le regroupement (42) des multiples DCI selon la quantité de PDSCH planifiés par chacune des multiples DCI comprend :
le regroupement, dans un groupe, d'une première DCI planifiant un PDSCH provenant de la ou des premières DCI et de la seconde DCI, le regroupement, dans un autre groupe, d'une ou plusieurs premières DCI planifiant au moins deux PDSCH ; ou
le regroupement, dans un groupe, d'une première DCI planifiant un PDSCH provenant de la ou des premières DCI et de la seconde DCI, et le regroupement d'une ou plusieurs premières DCI planifiant au moins deux PDSCH selon la quantité de PDSCH planifiés par chacune parmi la ou les premières DCI.

8. Procédé selon la revendication 3, dans lequel lors de la détermination du sous-livre de codes HARQ-ACK correspondant à chaque groupe de DCI du ou des groupes de DCI selon le DAI dans la DCI dans le groupe de DCI et un PDSCH planifié par la DCI dans le groupe de DCI ou la version de PDSCH SPS indiquée par la DCI dans le groupe de DCI, la détermination du sous-livre de codes HARQ-ACK correspondant à chaque groupe de DCI du ou des groupes de DCI selon le DAI dans la DCI dans le groupe de DCI et le PDSCH planifié par la DCI dans le groupe de DCI ou la version de PDSCH SPS indiquée par la DCI dans le groupe de DCI comprenant au moins l'un de ce qui suit :
la génération de HARQ-ACK de A*B bits pour les PDSCH planifiés par la DCI ou la version de PDSCH SPS indiquée par la DCI ;
le mappage des HARQ-ACK des A*B bits à des localisations, déterminées selon le DAI dans la DCI correspondante, dans le sous-livre de codes HARQ-ACK ;
la détermination d'une taille du sous-livre de codes HARQ-ACK selon le DAI dans la DCI dans le groupe de DCI ;
la génération d'un accusé de réception négatif, NACK, au niveau d'une localisation, dans le sous-livre de codes HARQ-ACK, où l'information n'est pas reçue,
dans lequel A est une quantité de bits HARQ-ACK correspondant à chaque PDSCH planifié par la DCI ou chaque version de PDSCH SPS indiquée par la DCI, B est une quantité de PDSCH planifiés par la DCI, et A et B sont des nombres entiers positifs, la quantité de bits HARQ-ACK correspondant à chaque PDSCH est déterminée selon un paramètre se rapportant à un mode de transmission du PDSCH,
dans lequel la génération des HARQ-ACK de A*B bits pour les PDSCH planifiés par la DCI ou la version de PDSCH SPS indiquée par la DCI comprend :
lorsqu'une DCI planifie au moins deux PDSCH, le classement des A bits HARQ-ACK pour chaque PDSCH des au moins deux PDSCH planifiés dans un ordre d'indices de porteuses dans lesquelles la pluralité planifiée de PDSCH sont localisés et/ou dans un ordre de localisations de domaine temporel au niveau desquelles la pluralité planifiée de PDSCH sont localisés, dans lequel la localisation de domaine temporel est un créneau ou un sous-créneau ou un ensemble de symboles.

9. Procédé de transmission d'accusé de réception de demande de répétition automatique hybride, HARQ-ACK, mis en œuvre par un dispositif côté réseau, comprenant :
la transmission (61) de multiples informations de commande de liaison descendante, DCI, dans lequel les multiples DCI comprennent une ou plusieurs premières DCI, dans lequel la ou les premières DCI planifient une pluralité de canaux partagés de liaison descendante physique, PDSCH ;
le procédé comprend en outre :
la réception (62) d'un livre de codes HARQ-ACK et l'obtention (62) d'un sous-livre de codes HARQ-ACK correspondant à chaque groupe de DCI d'un ou plusieurs groupes de DCI, dans lequel le ou les groupes de DCI sont obtenus par regroupement des multiples DCI selon une quantité de PDSCH planifiés par chacune des multiples DCI.

10. Procédé selon la revendication 9, dans lequel,
lorsqu'une quantité du ou des groupes de DCI vaut au moins deux, l'obtention (62) du sous-livre de codes HARQ-ACK correspondant à chaque groupe de DCI du ou des groupes de DCI comprend :
la détermination qu'au moins deux sous-livres de codes HARQ-ACK sont concaténés ensemble dans un ordre prédéterminé pour former le livre de codes HARQ-ACK.

11. Procédé selon la revendication 9, dans lequel, l'obtention (62) du sous-livre de codes HARQ-ACK correspondant à chaque groupe de DCI d'un ou plusieurs groupes de DCI comprend : la détermination du sous-livre de codes HARQ-ACK correspondant à chaque groupe de DCI du ou des groupes de DCI déterminé par le terminal selon un indice d'allocation de liaison descendante, DAI, dans une DCI dans le groupe de DCI et le PDSCH planifié par la DCI dans le groupe de DCI ou la version de PDSCH de planification semi-persistante, SPS indiquée par la DCI dans le groupe de DCI ;
dans lequel le DAI dans la DCI dans le groupe de DCI est utilisé pour indiquer la quantité de DCI dans le groupe de DCI.

12. Procédé selon la revendication 9, dans lequel, avant transmission (61) des multiples DCI, le procédé comprend en outre :
le regroupement des DCI, des multiples DCI, planifiant la même quantité de PDSCH dans un groupe ;
et/ou
un HARQ-ACK pour un PDSCH planifié par une DCI des multiples DCI ou une version de PDSCH de planification semi-persistante, SPS indiquée par une DCI des multiples DCI est transmis dans le même créneau ou sous-créneau ; et/ou un HARQ-ACK pour un PDSCH planifié par une DCI des multiples DCI ou une version de PDSCH SPS indiquée par une DCI des multiples DCI est transmis dans le même livre de codes HARQ-ACK.

13. Procédé selon la revendication 9, dans lequel, lorsque la première DCI planifie au moins deux PDSCH, les au moins deux PDSCH comprennent au moins l'un parmi ce qui suit :
au moins deux PDSCH transmis au niveau de localisations de domaine temporel différentes sur une porteuse ;
au moins deux PDSCH sur une pluralité de porteuses, dans lequel chacune des porteuses transporte un PDSCH ;
au moins deux PDSCH sur une pluralité de porteuses, dans lequel au moins l'une des porteuses transporte de multiples PDSCH transmis au niveau de localisations de domaine temporel différentes.

14. Procédé selon la revendication 9, dans lequel, lorsque au moins l'une des conditions est respectée, les multiples DCI sont regroupés selon une quantité de PDSCH planifiés par chacune des multiples DCI, pour obtenir un ou plusieurs groupes de DCI :
lorsque la première DCI planifie au moins deux PDSCH transmis sur une pluralité de porteuses, la pluralité de porteuses ont le même espacement de sous-porteuse ;
lorsque la première DCI planifie au moins deux PDSCH transmis sur une pluralité de porteuses, il n'y a aucun décalage entre les indices de créneaux ou de sous-créneau correspondant à la pluralité de porteuses ;
lorsque la première DCI planifie au moins deux PDSCH transmis sur une pluralité de porteuses, la pluralité de porteuses ont la même capacité de traitement de PDSCH ;
le terminal est configuré avec un livre de codes HARQ-ACK dynamique.

15. Procédé selon la revendication 12, dans lequel lors du regroupement de DCI, des multiples DCI, planifiant la même quantité de PDSCH dans un groupe, les multiples DCI comprennent en outre une seconde DCI permettant d'indiquer une version de PDSCH de planification semi-persistante, SPS, ou permettant de planifier un PDSCH ;
avant transmission (61) des multiples DCI, le procédé comprend en outre :
le regroupement, dans un groupe, de la première DCI planifiant un PDSCH provenant de la ou des premières DCI et de la seconde DCI, et le regroupement, dans un autre groupe, d'une ou plusieurs premières DCI planifiant au moins deux PDSCH ; ou
le regroupement, dans un groupe, de la première DCI planifiant un PDSCH provenant de la ou des premières DCI et de la seconde DCI, et le regroupement d'une ou plusieurs premières DCI planifiant au moins deux PDSCH selon la quantité de PDSCH planifiés par chacune parmi la ou les premières DCI.

16. Procédé selon la revendication 11, dans lequel lors de la détermination du sous-livre de codes HARQ-ACK correspondant à chaque groupe de DCI du ou des groupes de DCI déterminés par le terminal selon le DAI dans une DCI dans le groupe de DCI et le PDSCH planifié par la DCI dans le groupe de DCI ou la version de PDSCH SPS indiquée par la DCI dans le groupe de DCI, la détermination du sous-livre de codes HARQ-ACK correspondant à chaque groupe de DCI du ou des groupes de DCI déterminés par le terminal selon le DAI dans la DCI dans le groupe de DCI et le PDSCH planifié par la DCI dans le groupe de DCI ou la version de PDSCH SPS indiquée par la DCI dans le groupe de DCI comprend au moins l'un de ce qui suit :
la génération de HARQ-ACK de A*B bits pour les PDSCH planifiés par la DCI ou la version de PDSCH SPS indiquée par la DCI ;
le mappage des HARQ-ACK des A*B bits à des localisations, déterminées selon le DAI dans la DCI correspondante, dans le sous-livre de codes HARQ-ACK ;
la détermination d'une taille du sous-livre de codes HARQ-ACK selon le DAI dans la DCI dans le groupe de DCI ;
la génération d'un accusé de réception négatif, NACK, au niveau d'une localisation, dans le sous-livre de codes HARQ-ACK, où l'information n'est pas reçue,
dans lequel A est une quantité de bits HARQ-ACK correspondant à chaque PDSCH planifié par la DCI ou chaque version de PDSCH SPS indiquée par la DCI, B est une quantité de PDSCH planifiés par la DCI, et A et B sont des nombres entiers positifs, la quantité de bits HARQ-ACK correspondant à chaque PDSCH est déterminée selon un paramètre se rapportant à un mode de transmission du PDSCH,
dans lequel la génération des HARQ-ACK de A*B bits pour les PDSCH planifiés par la DCI ou la version de PDSCH SPS indiquée par la DCI comprend :
lorsqu'une DCI planifie au moins deux PDSCH, le classement des A bits HARQ-ACK pour chaque PDSCH des au moins deux PDSCH planifiés dans un ordre d'indices de porteuses dans lesquelles la pluralité planifiée de PDSCH sont localisés et/ou dans un ordre de localisations de domaine temporel au niveau desquelles la pluralité planifiée de PDSCH sont localisés, dans lequel la localisation de domaine temporel est un créneau ou un sous-créneau ou un ensemble de symboles.

17. Terminal, comprenant une mémoire (92), un processeur (91), un transcepteur (93) et un programme informatique stocké sur la mémoire (92) et exécutable sur le processeur (91) ; **caractérisé en ce que**, lorsque le processeur (91) exécute le programme informatique, le processeur (91) implémente les étapes du procédé de transmission de HARQ-ACK selon l'une quelconque des revendications 1 à 8.

18. Dispositif côté réseau, comprenant : une mémoire (102), un processeur (101), un transcepteur (103) et un programme informatique stocké sur la mémoire (102) et exécutable sur le processeur (101), **caractérisé en ce que**, lorsque le processeur (101) exécute le programme informatique, le processeur (101) implémente les étapes du procédé de transmission de HARQ-ACK selon l'une quelconque des revendications 9 à 16.
